# EUROPEAN PATENT SPECIFICATION

(11) **EP 1 853 004 B1**
(45) Date of publication and mention of the grant of the patent: **15.09.2010**
(21) Application number: 06026678.0
(22) Date of filing: 22.12.2006
(51) Int. Cl.: H04L 12/28, H04L 12/12, H04L 12/46, H04L 12/56

(54) **Access point supporting direct and indirect downstream delivery based on communication characteristics**
Zugriffspunkt, der direkte und indirekte nachgeordnete Datenzustellung, die auf Kommunikationsmerkmalen basiert, unterstützt
Point d'accès supportant une livraison vers le bas directe et indirecte basé sur des caractéristiques de communication

(30) Priority: 05.05.2006 US 418644; 06.06.2006 US 448240
(43) Date of publication of application: 07.11.2007
(73) Proprietor: Broadcom Corporation, Irvine, CA 92617 (US)
(72) Inventor: Bennett, James D., San Clemente CA 92672 (US)
(74) Representative: Jehle, Volker Armin

(56) References cited:
- EP-A- 1 587 262
- US-A1- 2002 160 771
- US-A1- 2006 062 206

## Description

### BACKGROUND OF THE INVENTION

### 1. Field of the Invention

Various aspects of present invention relate to direct and indirect delivery of packet data to a destination device via a variety of heterogeneous type of packet switched data networks.

### 2. Description of the Related Art

A computer, video game box, laptop, phone, PDA (Personal Digital Assistant) and many other types of terminals may be connected to a packet switched data network. Each terminal is typically assigned a unique network address by the packet switched data network. The terminal is identified by the unique network address and the packet switched data network uses the unique network address to send data packets to the terminal. The packet switched data network may be, for example, an EDGE (Enhanced Data Rates for GSM Evolution) network, GSM (Global System for Mobile Communications) network, CDMA (Code Division Multiple Access) network, IEEE (Institute of Electrical and Electronics Engineers) 802.11 network, Bluetooth, WiMax network, Internet, Intranet, satellite network, etc. The data packets typically comprise one or combination of real time and/or archived multimedia information such as text, audio, video, picture and control signal.

The terminal may be associated with more than one access points that belong to the same packet switched data network. Alternately or in addition the terminal may be associated with more than one access points that belong to different packet switched data networks which are communicatively incompatible with each other. The different packet switched communicatively compatible and/or incompatible data networks are communicatively coupled to each other. The terminal receives unique network addresses from each of the access points. An association of the terminal with an access point is identified by the unique network address assigned by the access point to the terminal. For example the terminal may be associated with a first access point that belongs to an EDGE network, a second access point that belongs to a GSM network and a third access point that belongs to an IEEE 802.11 network. The first access point, the second access point and the third access point assign a first network address, a second network address and a third network address to the terminal respectively. The terminal may receive data packets from another terminal and/or a network node via the first access point or the second access point or the third access point. In each of the cases an access point uses the corresponding network address for sending data packets to the terminal.

The first access point that belongs to the EDGE network sends the data packets destined for the terminal to the terminal using the first network address. The data packets might have originated from another terminal and/or a network node that belongs to a different packet switched data network or might have been generated by the first access point. Communication link between the first access point and the terminal may not be available at an instant of time which may typically happen if the terminal moves away and/or the communication link may not support desired QoS for delivery of the data packets to the terminal at the instant of time. Under above-mentioned cases the first access point fails to deliver the data packets to the terminal or delivery of the data packets via the communication link results in loss of packets.

Document US 2006/0062206 discloses a multi-link point to point protocol accessing method, involving associating an access device with a single path network and other networks, and accessing data of a service provider through an aggregation server.

Further limitations and disadvantages of conventional and traditional approaches will become apparent to one of ordinary skill in the art through comparison of such systems with various aspects of the present invention.

An access point that interacts with a downstream destination device and an upstream backbone network and supports both direct and indirect delivery of data packets to the destination device via a variety of heterogeneous type of packet switched data networks, substantially as shown in and/or described in connection with at least one of the figures, as set forth more completely in the claims.

According to the invention, there are provided communication infrastructures as defined by independent claims 1 and 8, an access point as defined by independent claim 4, and a method as defined by independent claim 10.

Further advantageous features of the invention are defined by the dependent subclaims.

Advantageously, the first wireless area network is communicatively incompatible with the second wireless area network.

Advantageously, the first access point performs the routing of the second data packets based on a communication characteristic.

Advantageously, the downstream communication interface has priority over the upstream communication interface.

Advantageously, the communications directed to the destination device comprising a first type of data packet and a second type of data packet, and the upstream communication interface is used to deliver the first type of data packet while the downstream communication interface is used to deliver the second type of data packet.

Advantageously, a difference between the first type of data packet and the second type of data packet comprising a quality of service difference.

Advantageously, the first protocol is communicatively incompatible with the second protocol.

These and other advantages, aspects and novel features of the present invention, as well as details of illustrative aspects thereof, will be more fully understood from the following description and drawings.

### BRIEF DESCRIPTION OF THE DRAWINGS

For various aspects of the present invention to be easily understood and readily practiced, various aspects will now be described, for purposes of illustration and not limitation, in conjunction with the following figures:

FIG. 1 is a schematic block diagram illustrating direct and indirect interaction of a plurality of access points with a plurality of end-point devices, each of the plurality of access points having information necessary for both direct and an indirect interaction with corresponding end-point devices in accordance with various aspects of the present invention;

FIG. 2 is a schematic block diagram illustrating indirect interaction of a first access point of FIG. 1 with corresponding client device via Internet backbone and a second access point;

FIG. 3 is a schematic block diagram illustrating communication between a client device and a plurality of associated access points wherein a first access point from the plurality of associated access points communicates with the client device via remaining of the plurality of associated access points;

FIG. 4 is a schematic block diagram illustrating a plurality of pathways from a first access point to a client device via an Internet backbone and a plurality of access points in accordance with various aspects of the present invention;

FIG. 5 is a schematic block diagram illustrating a plurality of components of a client device that supports a plurality of packet switched data paths from the client device to a plurality of associated access points;

FIG. 6 is a schematic block diagram illustrating a plurality of components of an access point that supports downstream packet switched data communication to at least one client device and upstream packet switched data communication to a backbone network;

FIG. 7 is a schematic that shows interaction of an access point with a mobile client device via other access points even after the mobile client device moves out of coverage area of the access point;

FIG. 8 is a flow chart illustrating a method of delivering data packet to a client terminal via direct path or indirect path by an access point;

FIG. 9 is a flow chart illustrating the method of delivering the data packet to the client terminal of FIG. 8 by the access point wherein the access point attempts to deliver the data packet via all available paths to the client terminal; and

FIG. 10 is a flow chart illustrating the method of delivering the data packet to the client terminal of FIG. 8 by the access point via an indirect pathway wherein the indirect pathway is selected from all available indirect pathways to the client terminal based on a communication characteristic.

### DETAILED DESCRIPTION

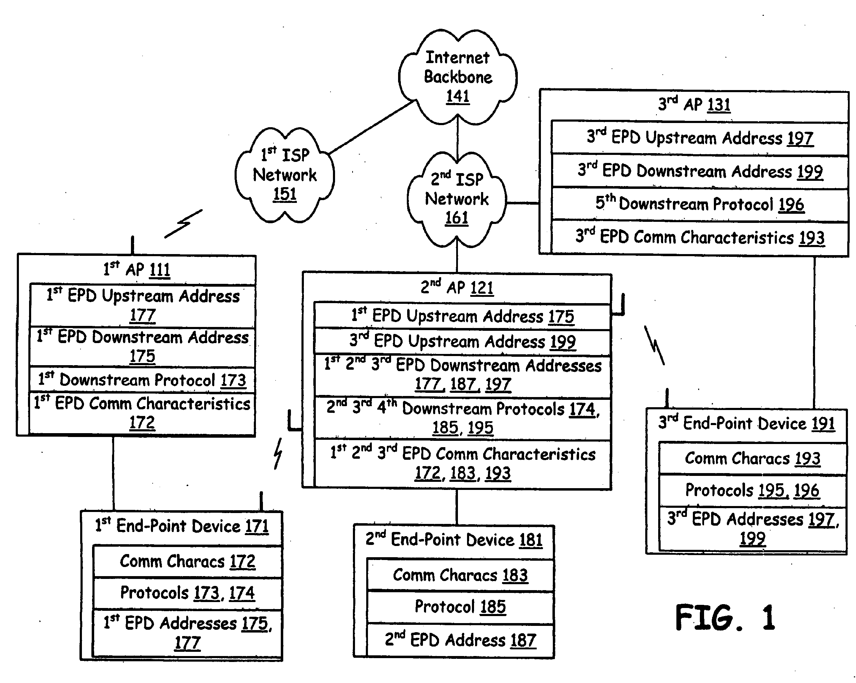

FIG. 1 is a schematic block diagram illustrating direct and indirect interaction of a plurality of access points 111, 121 and 131 with a plurality of end-point devices 171, 181 and 191, each of the plurality of access points 111, 121, 131 having information necessary for both direct and an indirect interaction with corresponding end-point devices. A first end point device (EPD) 171 is communicatively connected to a first access point (AP) 111 via a first wired link and communicatively connected to a second AP 121 via a first wireless link. A second EPD 181 communicates with the second AP 121 via a second wired link. A third EPD 191 interacts with the second AP 121 via a second wireless link and interacts with a third AP 131 via a third wired link. The first AP 111 is communicatively coupled to Internet backbone 141 via a first Internet Service Provider (ISP) network 151. The second AP 121 and the third AP 131 are communicatively connected to the Internet backbone 141 via a second ISP network 161. Each of the first ISP network 151 and the second ISP network 161 may support one or more of a variety of protocols for packet data transfer such as IEEE 802.11 protocol, WiMax protocol, EDGE protocol, GPRS protocol, WCDMA protocol etc. Each of the end point devices 171, 181 and 191 are able to send and receive data packets from each other via respective access point, respective ISP network and the Internet backbone 141. As an example the first EPD 171 may send and receive data packets from the second EPD 181, where the data packets originating at the second EPD 181 reach the first EPD 171 via the second AP 121, the second ISP network 161, the Internet backbone 141, the first ISP network 151 and the first AP 111. Each of the end point devices 171, 181 and 191 may be a laptop, a personal computer, a phone, a PDA, a television or any of a variety of devices that are adapted to handle packet data.

Each of the end point devices 171, 181 and 191 use unique network addresses to communicate with corresponding access point(s). As an example the first EPD 171 and the first AP 111 exchange data packets that are encapsulated with a downstream network address 175. "Downstream network address" refers to a network address used by an AP (111, 121 or 131) to communicate directly with an EPD (171, 181 or 191). The first EPD 171 and the second AP 121 use downstream network address 177 to exchange data packets between them. The first EPD 171 stores the downstream network addresses 175 and 177 in a memory of the first EPD 171. The first EPD 171 may use same or different protocols to communicate respectively with the first AP 111 and the second AP 121. The first EPD 171 collects and/or retrieves information related to protocol(s) it uses for communicating with associated access points. The first EPD 171 and the first AP 111 store 173 in respective memories, where 173 is information related to a first protocol that they use for packet data communication. The information related to the first protocol 173 may comprise a protocol identifier, version number, maximum data rate supported by the first protocol, security information, QoS provided by the first protocol etc. The first EPD 171 and the second AP 121 store 174 in respective memories, where 174 is information related to a second protocol which is used by the first EPD 171 and the second AP 121 during direct packet data communication between them. The first EPD 171 sends the protocol related information 174 to the first AP 111 for storage. The first AP 111 is thus made aware of the information related to the second protocol that the first EPD 171 uses for communicating with the second AP 121. The first EPD 171 in addition sends the protocol related information 173 to the second AP 121 to make the second AP 121 aware of information related to the first protocol that is used for packet data communication between the first AP 111 and the first EPD 171.

The first AP 111 receives the network address 177 from the first EPD 171. The first AP 111 is not adapted to use the network address 177 for direct communication with the first EPD 171 along downstream direction. The first AP 111 stores the network address 177 that is referred as first EPD upstream address of the first AP 111 to indicate that the first AP 111 is adapted to use the network address 177 for packet data communication along upstream direction. "Upstream network address" refers to a network address used by an AP (111, 121 or 131) to send and/or receive data packets from a network node other than an EPD (171, 181 or 191). The second AP 121 receives the network address 175, which is used by the first AP 111 for downstream communication with the first EPD 171 from the first EPD 171. The network address 175 is referred to as first EPD upstream address of the second AP 121 to indicate that the second AP 121 is adapted to use the network address 175 for packet data communication along upstream direction. The first AP 111. is communicatively associated with the first EPD 171 and the thus first AP 111 stores network addresses of the first EPD 171 corresponding to all network associations of the first EPD 171. Similarly the second AP 121 stores network addresses of the first EPD 171, the second EPD 181 and the third EPD 191 corresponding to all network associations of the first EPD 171, the second EPD 181 and the third EPD 191.

The first EPD 171 collects communication characteristics corresponding to two communication links the first EPD 171 has with two access points, the first wired link with the first AP 111 and the first wireless link with the second AP 121. The first EPD 171 stores the collected communication characteristics 172 in the memory of the first EPD 171. The first EPD 171 sends the collected communication characteristics 172 to all access points with which the first EPD 171 is associated. In this exemplary case the first EPD 171 sends the collected communication characteristics 172 to each of the first AP 111 and the second AP 121. The first AP 111 and the second AP 121 store the communication characteristics 172 in respective memories. The communication characteristics 172 may, for example, comprise current performance of the first wired link and the first wireless link, such as current traffic load, noise and/or interference level, delay, cost etc. of each of the first wired link and the first wireless link. The first EPD 171 may collect and send the communication characteristics 172 periodically to keep the first AP 111 and the second AP 121 updated about the performance of the first wired link and the first wireless link. The first AP 111 is made aware of performance of communication links between the first EPD 171 and all associated access points (i.e., the first AP 111 and the second AP 121). Similarly the second AP 121 is made aware of performance of the communication links between the first EPD 171 and all associated access points (i.e., the first AP 111 and the second AP 121).

The second AP 121 is communicatively associated with the first EPD 171, the second EPD 181 and the third EPD 191. The second AP 121 may use same or different packet switched data protocols to communicate with associated end point devices, 171, 181 and 191. The first wireless link between the second AP 121 and the first EPD 171 may typically support packet data communication using IEEE 802.11 protocol. The second wired link between the second AP 121 and the second EPD 181 may typically support fiber optic data protocol and the second wireless link between the third EPD 191 and the second AP 121 may again support IEEE 802.11 protocol. Network addresses 175 and 177 of the first EPD 171 are available with the second AP 121. The second EPD 181 communicates with the second AP 121 using network address 187. The second EPD 181 collects communication characteristics 183 corresponding to the second wired link. The second EPD 181 stores the communication characteristics 183 in a memory of the second EPD 181 and in addition sends the communication characteristics 183 to the second AP 121 for storage in the second AP 121. Protocol related information 185 is stored in the second AP 121 and in the second EPD 181. The protocol related information 185 may comprise maximum data rate supported by the fiber optic data protocol, security information, QoS provided by the fiber optic data protocol etc.

The third EPD 191 is communicatively connected to the second AP 121 and the third AP 131. The third EPD 191 uses network address 197 and 199 to exchange data packets respectively with the second AP 121 and the third AP 131. The network address 197 is referred to as third EPD downstream address of the second AP 121 and the network address 199 is referred to as third EPD downstream address of the third AP 131 as the network addresses 197 and 199 are respectively used for downstream communication of the second AP 121 and the third AP 131 with the third EPD 191. The second AP 121 receives the network address 199 from the third EPD 191 and stores as third EPD upstream address in the second AP 121 as the second AP 121 is not adapted to use the network address 199 for downstream communication with the third EPD 131. The second AP 121 is adapted to use the network address 199 for upstream communication with a node (i.e., a server, a switch, a router etc.) other than any of the end point devices 171, 181 and 191. The third AP 831 receives the network address 197 from the third EPD 191 and stores as third EPD upstream address. The third AP 831 is adapted to use the network address 197 for upstream communication with an upstream node and not for downstream communication with any of the end point devices 171, 181 and 191.

The third EPD 191 collects communication characteristics 193 corresponding to the second wireless link and the third wired link and sends the communication characteristics 193 to each of the second AP 121 and the third AP 131. Each of the third EPD 191, the second AP 121 and the third AP 131 store protocol related information 195 and 196 in respective memories. The protocol related information 195 might typically comprise maximum data rate supported and QOS provided by the IEEE 802.11 protocol. The protocol related information 196 may typically comprise maximum data rate supported and QOS provided by a PSTN data network that is used for packet data communication over the third wired link between the third AP 131 and the third EPD 191. The second AP 121 thus has network addresses (175, 177, 187, 197, 199), communication characteristics (172, 183, 193) and protocol related information (173, 174, 185, 195, 196) corresponding to network associations of all end point devices to which the second AP 121 is associated (171, 181, 191) stored in the memory of the second AP 121.

The first AP 111 communicates directly with the first EPD 171 using the first EPD downstream network address 175 and via the first wired link between the first EPD 171 and the first AP 111. At an instant of time the first AP 111 may not be able to send data packets to the first EPD 171 via the first wired link. This may happen, for example, if the first wired link is broken, or the first EPD 171 may be in a sleep mode and does not receive data packets that are arriving from the first AP 111. Alternately, the first AP 111 may determine that traffic load on the first wired link has exceeded a maximum allowable limit at the instant of time and may subsequently decide not to send the data packets to the first EPD 171 via the first wired link. The first AP 111 may take the decision using the first EPD communication characteristics 172. As an example, at the instant of time, the first EPD 171 is not registered with the first AP 111 i.e., the first AP 111 and the first EPD 171 have not yet agreed to communicate with each other using the downstream network address 175 and via the first wired link. The first AP 111 may want to wake up the first EPD 171 i.e., may request the first EPD 171 for registration by sending control data to the first EPD 171. Under all such above circumstances, the first AP 111 uses the first EPD upstream network address 177 to send packets (control data, commands and/or data) to the first EPD 171.

Whenever the first AP 111 is unable to and/or does not desire to communicate directly with the first EPD 171 via the first wired link, the first AP 111 encapsulates data packets destined for the first EPD 171 with the first EPD upstream network address 177 and transmits the encapsulated data packets to immediate next upstream network node via an upstream communication link. The immediate next network node sends the encapsulated data packets to the Internet backbone 141 that may broadcast the encapsulated data packets. The encapsulated data packets reach all other access points, i.e., the second AP 121 and the third AP 131. The second AP 121 uses the network address 177 to communicate directly with the first EPD 171. The second AP 121, upon receiving the encapsulated data packets from the Internet backbone 141, deciphers the encapsulated data packets and determines that the encapsulated data packets are destined for the first EPD 171. The second AP 121 forwards the encapsulated data packets to the first EPD 171. The data packets destined for the first EPD 171 eventually reaches the first EPD 171 from the first AP 111 via the second AP 121. Each of the access points 111,121 and 131 uses other network addresses of associated end point devices to send data packets indirectly to associated end point devices via other access points as and when required.

Each of the access points, 111,121 and 131 may communicate with an associated end point device simultaneously via a direct downstream path and via an indirect upstream path. As an example, the first AP III may decide to send every alternate data packet to the first EPD 171 using the first EPD upstream network address 177 and via the Internet backbone 141 instead of sending all data packets directly to the first EPD 171 using the first EPD downstream network address 175 whenever traffic load on direct path (the first wired link) exceeds a preset value. The first AP 111 which is using the direct path and the first EPD downstream network address 175 for interacting with the first EPD 171 may be adapted to send all subsequent data packets to the first EPD 171 via indirect path (using the first EPD upstream network address 177 and via the Internet backbone 141) whenever interference level in the direct path crosses a preset value and/or bit error rate on the direct path exceeds an upper limit, i.e., whenever the direct path fail to support a desired quality of service. The first AP 111 may be adapted to attempt delivery of data packets to the first EPD 171 via the direct path by default and only upon failure may attempt delivery of the data packets via the indirect path. The first AP 111 may alternately be adapted to attempt delivery of a particular type of packets via the indirect path. As an example, the first AP 111 may send only control and/or command data to the first EPD 171 via the indirect path. The first AP 111 may be adapted to use the indirect path to the first EPD 171 only during registration of the first EPD 171 with the first AP 111. The first AP 111 may use the indirect path and the first EPD upstream network address 177 for interacting with the first EPD 171 in response to a user request received via a user input interface of the first AP 111.

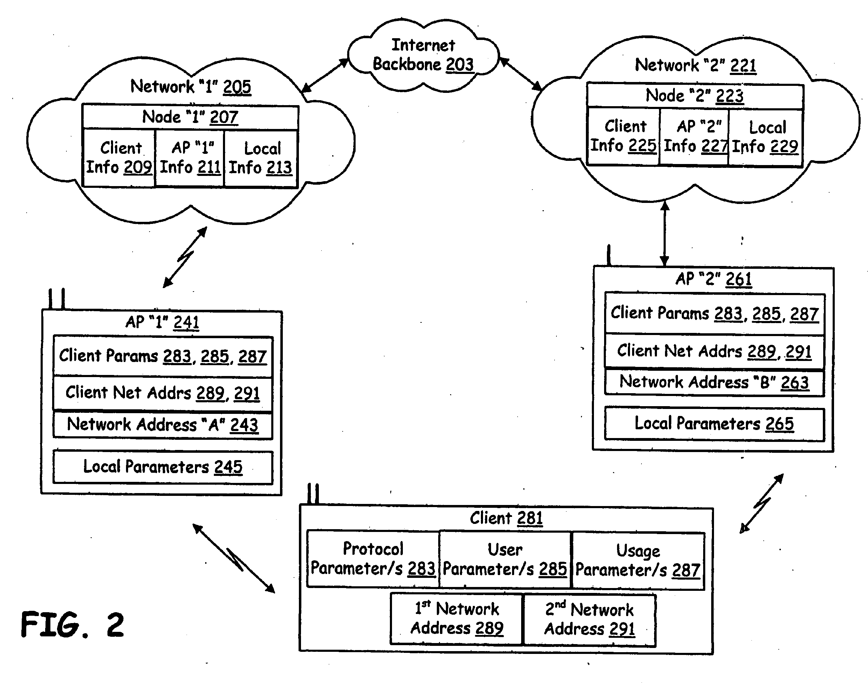

FIG. 2 is a schematic block diagram illustrating indirect interaction of a first access point 111 of FIG. 1 with corresponding client device 171 via Internet backbone 203 and a second access point 261. The first AP (access point) 241 is communicatively connected to a downstream client device 281. Each of "client device", "end-point device" and "destination device" refers to a device or a circuitry that is adapted to handle packet data transmission and reception. Typical example of client device is a phone, a PDA, a television, a PC, a laptop etc. The first AP 241 is communicatively connected to a first upstream node 207 that belongs to a packet switched data network 205. The first packet switched data network 205 (i.e., the first upstream node 207) is communicatively connected to an Internet backbone 203. "Downstream device" refers to a device that is located away from the Internet backbone 203 relative to an access point. "Upstream node" refers to a node that is located nearer to the Internet backbone 203 relative to an access point.

The client device 281 is communicatively connected to the second AP 261. The second AP 261 is communicatively connected to the Internet backbone 203 via a second network node 223 that belongs to a second network 221. The first network 205, the first network node 207 and the first AP 241 support a first packet switched data protocol. The second network 221, the second network node 223 and the second AP 261 support a second packet switched data protocol. The first packet switched data protocol may not be pursuant with the second packet switched data protocol. Each of the first network node 207 and the second network node 223 may be, for example, a switch, a router, a modem or a server. The client device 281 has a first pathway to the Internet backbone 203 that goes through a first wireless link between the client device 281 and the first AP 241, the first AP 241 and the first network node 207. In addition the client device 281 has a second pathway to the Internet backbone 203 that goes through a second wireless link between the client device 281 and the second AP 261, the second AP 261 and the second network node 223. The client device 281 communicates with the first AP 241 using a first network address 289. The first AP 241 encapsulates data packets destined for the client device 281 with the first network address 289 and sends the encapsulated data packets to the client device 281 via the first wireless link and using the first packet switched data protocol. The client device exchanges data packets with the second AP 261 using a second network address 291. The second AP 261 encapsulates data packets destined for the client device 281 with the second network address 291 and sends the encapsulated data packets to the client device 281 via the second wireless link and using the second packet switched data protocol. The first network address 289 and the second network address 291 are typically Internet Protocol (IP) addresses that are assigned by the first AP 241 and the second AP 261 to the client device 281 respectively.

The client device 281 collects protocol parameters 283. corresponding to its associations and stores the collected protocol parameters 283 in a memory of the client device 281. The protocol parameters 283 may typically comprise maximum data rate supported by the first packet switched data protocol and the second packet switched data protocol, version number, protocol identifier, security information, minimum bandwidth requirement, encryption/decryption required for exchange of data packets and quality of service provided by the first packet switched data protocol and the second packet switched data protocol. The client device 281 may have some all of the protocol parameters 283 hardwired into the memory of the client device 281. The client device 281 may receive some or all of the protocol parameters 283 from any of network nodes including the first AP 241, the second AP 261, the first node 207, the second node 223 and the Internet backbone 203.

The client device 281 in addition collects usage parameters 287 corresponding to its associations and stores the collected usage parameters 287 in the memory of the client device 281. The usage parameters 287 may comprise current traffic load, noise and/or interference level, delay experienced, cost of the first wireless link and the second wireless link. The usage parameters 287 may change with time as load on any of the first and the second wireless link or interference level in any of the first and the second wireless link may change with time. The client device 281 collects the usage parameters 287 at regular intervals and stores updated usage parameters in the memory of the client device 381. The usage parameters 287 may include traffic load, interference, latency of any link or network node that is part of the first pathway and/or the second pathway between the client device 281 and the Internet backbone 203. The usage parameters 287 reflect current performance of the first pathway and the second pathway. A processing circuitry of the client device 281 may evaluate the usage parameters 287 and/or may receive all or some of the usage parameters 287 from any of network nodes including the first AP 241, the second AP 261, the first node 207, the second node 223 and the Internet backbone 203.

The client device 281 receives user parameters 285 entered via a user input interface of the client device 281. The user parameters 285 may comprise user identity, desirable downstream data rate, desirable cost, user preference for a protocol, user preference for a pathway etc. The user identity may identify a plurality of services that a user using the client device 281 may avail of. The client device 281 transmits the collected protocol parameters 283, the user parameters 285 and the usage parameters 287 to the first AP 241 using the first network address 289 and also to the second AP 261 using the second network address 291. The client device 281 in addition sends the second network address 291 to the first AP 241 and the first network address 289 to the second AP 261. The first AP 241 is thus made aware of the second network address 291, an address that the second AP 261 uses for communication with the client device 281. Similarly the second AP 261 knows the first network address 289, an address that the first AP 241 uses for communication with the client device 281.

The first AP 241 is adapted to send data packets to the client device 281 using the first network address 289. The first AP 241 is in addition adapted to route the data packets to the client device 281 using the second network address 291 whenever the data packets encapsulated with the first network address 289 fail to reach the client device 281 and/or whenever the client device 281 fails to receive the data packets encapsulated with the first network address 289. The above situation may happen when the first wireless link between the client device 281 and the first AP 241 fails. The above situation may also happen when the client device 281 is in a "sleep mode" in the first packet switched data network due to a long duration of inactivity and fails to respond to the data packets sent to it by the first AP 241. The first AP 241 determines that the client device 281 has not received the data packets encapsulated with the first network address 289. Subsequently the first AP 241 encapsulates the data packets with the second network address 291 and transmits encapsulated data packets to the upstream first node 207. The first node 207 forwards the encapsulated data packets to the Internet backbone 203. The first AP 241 may attach an identifier to the encapsulated data packets where the identifier indicates that the encapsulated data packets are destined for all access points communicatively connected to the Internet backbone 203. The first AP 241 does not have network address of the second AP 261 and hence the encapsulated data packets need to be sent to all access points communicatively connected to the Internet backbone 203. The Internet backbone 203 broadcasts the encapsulated data packets to all packet switched data networks so that the encapsulated data packets eventually reach the second AP 261. The second AP 261 deciphers the encapsulated data packets, determines that the encapsulated data packets are destined for the client device 281 and subsequently transmits the encapsulated data packets to the client device 281. If the client device 281 is in "active mode" in the second packet switched data network then the client device 281 receives the encapsulated data packets. The first AP 241, which is unable to send to the data packets to the client device 281 directly using the first network address 289, routes the data packets to the client device 281 via the second AP 261.

The first AP 241 may be adapted to use the first network address 289 and the second network address 291 simultaneously for data packets destined for the client device 281. As an example, whenever traffic load on the first wireless link between the first AP 241 and the client device 281 exceeds a preset value, the first AP may decide to send a portion of the data packets directly to the client device 281 via the first wireless link and using the first network address 289, and to route remaining portion of the data packets to the client device 281 indirectly via the Internet backbone 203 and the second AP 261 using the second network address 291. The first AP 241 may be alternately adapted to use indirect route via the Internet backbone 203 for routing a particular type of data packet, for example, command data. As an example, the first AP 241 may use the indirect route for sending "wake up" command to the client device 281 that has entered into a "sleep mode" in the first packet switched data network. The first AP 241 may choose to use the indirect route for sending data packets to the client device 281 in response to a request from the client device 281 that arrives at the first AP 241 via the indirect route. The first AP 241 may use any of a variety of encryption for data packets that the first AP 241 routes via the indirect route to the client device 281 for added security.

The first AP 241 may decide to use the indirect path via the Internet backbone 203 and the second AP 261 in addition and/or in lieu of direct path via the first wireless link depending on a variety of factors. Typical examples of the variety of factors may be cost of the direct path and the indirect path, delay in the direct path and in the indirect path, quality of service guaranteed in the direct path and in the indirect path etc. The first AP 241 may never choose to use the indirect path for delivery of multimedia data packets if the indirect path offers a large delay. Alternately, the first AP 241 may always chose to use the indirect path for delivery of multimedia packets when the first AP 241 is sending signaling information to the client device 281 via the direct path using the first network address 289. The first AP 241 may use the protocol parameters 283, the user parameters 285 and the usage parameters 287 to select the first network address 289 and the second network address 291 simultaneously and/or alternately for delivering data packets to the client device 281.

The second AP 261 is in addition adapted to transmit data packets destined for the client device 281 via the second wireless link, i.e., via direct path to the client device 281 using the second network address 291 and/or route the data packets via the Internet backbone 203 and the first AP 241, i.e., via indirect path to the client device 281 using the first network address 289. The second AP 261 uses the protocol parameters 283, the user parameters 285 and the usage parameters 287 received from the client device 281 to perform delivery of the data packets using the first network address 289 and the second network address 291.

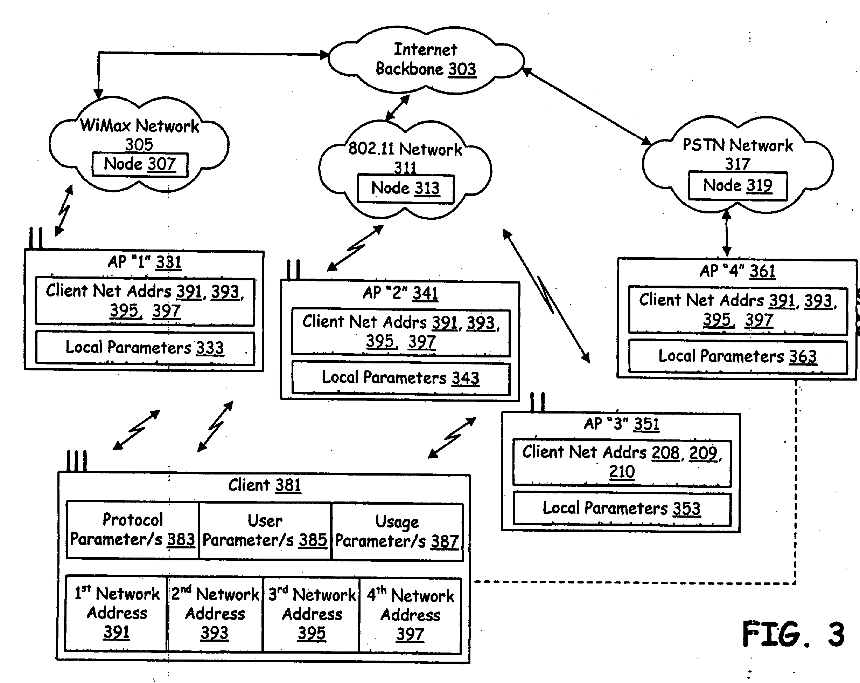

FIG. 3 is a schematic block diagram illustrating communication between a client device 381 and a plurality of associated access points 331, 341, 351 and 361 wherein one access point 361 from the plurality of associated access points 331, 341, 351 and 361 communicates with the client device 381 via remaining of the plurality of associated access points, 331, 341 and 351. The client device 381 is associated with the a first AP 331, a second AP 341, a third AP 351 and a fourth AP 361. Association of the client device 381 with an AP refers to the AP assigning a unique network address that may typically be an IP address to the client device 381. The client device 381 and the AP agree to use the unique network address for downstream data packet transmission i.e., the AP encapsulates any data packet destined for the client device 381 with the unique network address and the client device 381 agrees to receive any data packet that arrives at the client device 381 encapsulated with the unique network address. Unique network addresses assigned by the first AP 331, the second AP 341, the third AP 351 and the fourth AP 361 to the client device 381 are a first network address 391, a second network address 393, a third network address 395 and a fourth network address 397 respectively.

The first AP 331 uses WiMax protocol for upstream as well as downstream communication, i.e., the first AP 331 communicates with the downstream client device 381 and with an upstream network node 307 that belongs to a WiMax network 305 using the WiMax protocol. The WiMax network 305 is communicatively connected to a backbone network i.e., Internet backbone 303. The second AP 341, the third AP 351 and the fourth AP 361 respectively use IEEE 802.11 protocol, IEEE 802.11 protocol and a protocol pursuant to PSTN network 317 for respective upstream and downstream communication. The first AP 331, the second AP 341 and the fourth AP 361 use communicatively incompatible communication protocols for data packet transmission and reception. The client device 381 has four pathways to the Internet backbone 303. A first pathway between the client device 381 and the Internet backbone 303 comprises a first wireless link between the client device 381 and the first AP 331, the first AP 331, a second wireless link between the first AP 331 and the network node 307 and the Internet backbone 303. A second pathway between the client device 381 and the Internet backbone 303 comprises a third wireless link between the client device 381 and the second AP 341, the second AP 341, a fourth wireless link between the second AP 341 and network node 313 and the Internet backbone 303. A third pathway between the client device 381 and the Internet backbone 303 comprises a fifth wireless link between the client device 381 and the third AP 351, the third AP 351, a sixth wireless link between the third AP 351 and network node 319 and the Internet backbone 303. A fourth pathway between the client device 381 and the Internet backbone 303 comprise a first wired link between the client device 381 and the fourth AP 361, the fourth AP 361, a second wired link between the fourth AP 361 and network node 319 and the Internet backbone 303. The client device may send and/or receive packet data from the Internet backbone 303 via any of the four pathways.

The client device collects protocol parameters 383, user parameters 385 and usage parameters 387 corresponding to its four network associations with the access points 331, 341, 351 and 361 and sends the protocol parameters 383, the user parameters 385 and the usage parameters 387 to each of the first AP 331, the second AP 341, the third AP 351 and the fourth AP 361. The protocol parameters 383 typically comprise maximum bit rate, minimum bandwidth, quality of service, latency etc. offered by protocols corresponding to the four pathways, which in this exemplary case are the WiMax protocol, the IEEE 802.11 protocol and the protocol pursuant to PSTN network 317. The user parameters 385 comprise user preferences, for example user preference for a particular protocol, user preference for a particular pathway, desired download data rate etc. The usage parameters 387 typically comprise current traffic load, interference level, current offered data rate etc. corresponding to the four pathways. Each of the first AP 331, the second AP 341, the third AP 351 and the fourth AP 361 are aware of the protocol parameters 383, the user parameters 385 and the usage parameters 387 corresponding to four associations of the client device 381.

The client device 381 in addition sends the second network address 393, the third network address 395 and the fourth network address 397 to the first AP 331. The first AP 331 is made aware of network addresses of the client device 381 corresponding to network associations of the client device 381 other than the first AP 331. The second AP 341 receives the first network address 391, the third network address 395 and the fourth network address 397 from the client device 381. Each of the third AP 351 and the fourth AP 361 know network addresses of the client device 381 corresponding to other network associations of the client device 381.

The client device 381 may be a mobile device. At an instance of time the client device 381 moves out of coverage area of the fourth AP 361 and the first wired link between the client device 381 and the fourth AP 361 gets unplugged. The fourth AP 361 gets aware of unavailability of the first wired link between the fourth AP 361 and the client device 381. The fourth AP 361 may subsequently desire to send a plurality of data packets to the client device 381. The plurality of data packets may comprise signaling information, commands and/or instructions for the client device 381, information related to association of the client device 381 with the fourth AP 361, data packets coming from the PSTN network 317 to the fourth AP 361 and meant for the client device 381 etc. The fourth AP 361 determines that the fourth AP 361 can not send the plurality of data packets directly to the client device 381 via the first wireless link and using the fourth network address 397. The fourth AP 361 encapsulates the plurality of data packets destined for the client device 281 with the first network address 391 and routes the encapsulated data packets to the Internet backbone 303 via the PSTN network 317. The Internet backbone 303 broadcasts the encapsulated data packets to all downstream packet switched data networks i.e., the WiMax network 305, the IEEE 802.11 network 311 and the PSTN network 317. The WiMax network 305, the IEEE 802.11 network 311 and the PSTN network 317 subsequently forwards the encapsulated data packets to all downstream network nodes and access points. The encapsulated data packets reach the first AP 331, the second AP 341 and the third AP 351. The first AP 331 deciphers the encapsulated data packets and determines that the encapsulated data packets are meant for the client device 381. The first AP 331 forwards the encapsulated data packets to the client device 381. The client device 381 receives the encapsulated data packets from the first AP 331 if the client device 381 is located within coverage area of the first AP 331. The plurality of data packets that the fourth AP 361 desired to send to the client device 381, ultimately reaches the client device 381 via the first AP 331. Each of the second AP 341 and the third AP 351 receives the encapsulated data packets, that are encapsulated with the first network address 391, from the Internet backbone 303 but does not forward the encapsulated data packets to the client device 381 because the second AP 341 and the third AP 351 are permitted to communicate with the client device 381 using only the second network address 393 and the third network address 395 respectively.

The fourth AP 361 may encapsulate the plurality of data packets that it desires to send to the client device 381 using the second network address 393. The plurality of data packets encapsulated with the second network address 393 reach the client device 381 via the Internet backbone 303, the IEEE 802.11 network 311 and the second AP 341. The fourth AP 361 may encapsulate the plurality of data packets with the first network address 391, the second network address 393 and the third network address 395, and send encapsulated data packets to the Internet backbone 303, one at a time. The plurality of data packets thus reaches the client device 381 via each of the first AP 331, the second AP 341 and the third AP 351. This redundancy ensures that the plurality of data packets finally reaches the client device 381. This redundancy increases processing load on the fourth AP 361 and increases traffic in the Internet backbone 303. The fourth AP 361 may send multiple copies of the plurality of data packets, each copy encapsulated with a different address, to the Internet backbone 303 only for a particular type of data packets, for e.g., when the plurality of data packets comprise signaling information, instructions to the client device 381, information related to association of the client device 381 with the fourth AP 361 etc.

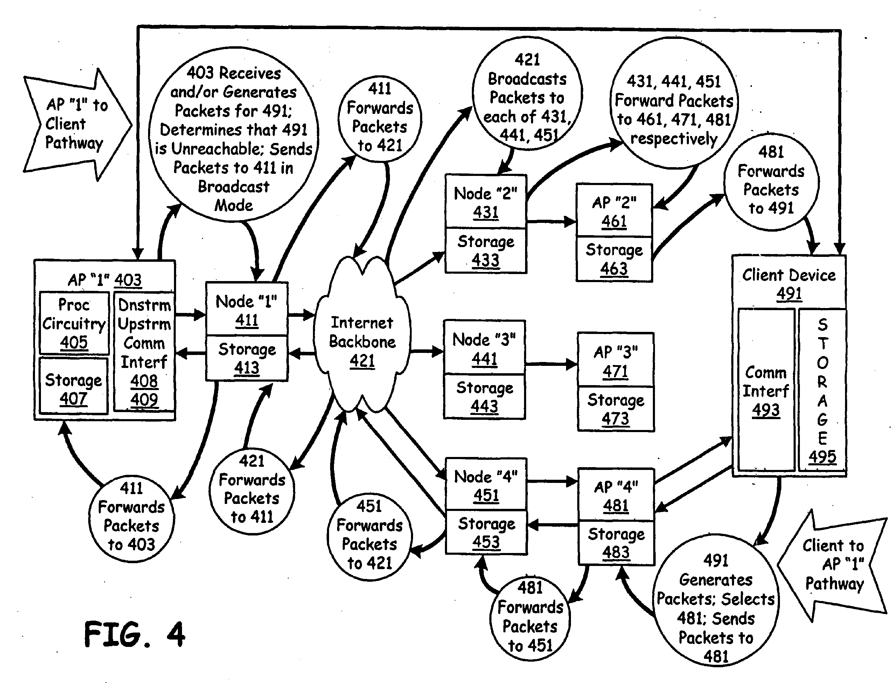

FIG. 4 is a schematic block diagram illustrating a plurality of pathways from a first access point 403 to a client device 491 via an Internet backbone 421 and a plurality of access points 461, 471 and 481. The first access point 403 is associated with the client device 491. The client device 491 is in addition associated with a second AP 461, a third AP 471 and a fourth AP 481. The client device 491 receives four unique IP addresses corresponding to its associations with the first AP 403, the second AP 461, the third AP 471 and the fourth AP 481 from respective access points. The client device 491 sends the four unique IP addresses to each of the first AP 403, the second AP 461, the third AP 471 and the fourth AP 481. Each of the first AP 403, the second AP 461, the third AP 471 and the fourth AP 481 are aware of IP addresses corresponding to other network associations of the client device 491. The first AP 403 has knowledge of IP addresses that the client device 491 has received from each of the second AP 461, the third AP 471 and the fourth AP 481 i.e., the first AP 403 is aware of the IP addresses that each of the second AP 461, the third AP 471 and the fourth AP 481 uses for sending data packets directly to the client device 491.

The first AP 403 stores the IP addresses that each of the second AP 461, the third AP 471 and the fourth AP 481 uses for downstream communication with the client device 491 in a storage 407 of the first AP 403. The first AP 403 comprises a downstream communication interface 408 via which the first AP 403 exchanges data packets directly with the client device 491 using an IP address that the first AP 403 assigns to the client device 491. The first AP 403 comprises an upstream communication interface 409 via which the first AP 403 exchanges data packets with a first network node 411. The first network node 411 may be a switch, a hub, a router, a server, an Internet service provider equipment etc. The first network node 411 is communicatively coupled to Internet backbone 421. A processing circuitry 405 of the first AP 403 decides not to exchange data packets directly with the client device 491 via the downstream communication interface 408. The processing circuitry 405 may take such a decision at an instant of time if a direct communication link between the downstream communication interface 408 and the client device 491 is unavailable at the instant of time. The processing circuitry 405 may take such a decision based on user preferences, communication characteristics of available pathways, protocol information corresponding to the available pathways between the first AP 403 and the client device 491.The characteristics corresponding to the four pathways. The communication characteristics may typically include current traffic load in the four pathways, current interference level in the four pathways, current delay in the four pathways etc. The client device 491 in addition collects protocol information corresponding to the four pathways where the protocol information may typically refer to maximum data rate, offered quality of service, minimum bandwidth, cost, robustness, encryption/decryption, transmit power etc. required by protocols that are used for data packet exchange along the four pathways. The first AP 403, the second AP 461, the third AP 471 and the fourth AP 481 may use different and communicatively compatible and/or incompatible protocols for transmission and reception of packet switched data. The client device 491 may collect all or some of the communication characteristics and the protocol information from any of the network nodes, such as 411, 431, 441 and 451, any of the access points, such as 403, 461, 471 and 481 and the Internet backbone 421. The client device 491 receives the user preferences via a user input interface of the client device 491. The user preferences may typically include desired data rate, desired protocol, maximum allowable delay etc. The client device sends the user preferences, the communication characteristics and the protocol information corresponding to the four pathways to each of the first AP 403, the second AP 461, the third AP 471 and the fourth AP 481. Each of the first AP 403, the second AP 461, the third AP 471 and the fourth AP 481 stores the user preferences, the communication characteristics and the protocol information corresponding to the four pathways in storage 407, 463, 473 and 483 respectively. Any of the network nodes such as 411, 431, 441 and 451, and the Internet backbone 421 may in addition store the user preferences, the communication characteristics and the protocol information corresponding to the four pathways in respective storage unit.

As an example, the first AP 403 looks into the user preferences, the communication characteristics and the protocol information corresponding to the four pathways between the client device 491 and the Internet backbone 421 at the instant of time and determines that traffic load on direct communication link between the first AP 403 and the client device 491 is more than traffic load on the fourth pathway between the client device 491 and the Internet backbone 421. In order to balance traffic load between the direct communication link and the fourth pathway, the first AP 403 encapsulates data packets meant for the client device 491 with a network address that is assigned by the fourth AP 481 to the client device 491. The first AP 403 sends the encapsulated data packets via the upstream communication interface 409 to the first network node 411. The first AP 403 attaches an identifier to the encapsulated data packets where the identifier indicates that the encapsulated data packets are to be broadcast to all network nodes. The first network node 411 responds to the identifier and forwards the encapsulated data packets to the Internet backbone 421. The Internet backbone 421 subsequently broadcasts the encapsulated data packets to all available network nodes except the first network node 411, i.e., to the second network node 431, the third network node 441 and the fourth network node 451. The second network node 431, the third network node 441 and the fourth network node 451 forward the encapsulated data packets to the second AP 461, the third AP 471 and the fourth AP 481 respectively. Each of the second AP 461, the third AP 471 and the fourth AP 481 receives the encapsulated data packets from respective upstream network nodes i.e., 431, 441 and 451 via respective upstream communication interfaces. The encapsulated data packets contain the network address that is assigned by the fourth AP 481 to the client device 491. The fourth AP 481 sends the encapsulated data packets directly to the client device 491 via a second direct communication link between the fourth AP 481 and the client device 491 (where the second direct communication link between the fourth AP 481 and the client device 491 is part of the second pathway between the client device 491 and the Internet backbone 421) via a downstream communication interface of the fourth AP 481. The second AP 461 and the third AP 471 discards the encapsulated data packets that contain the network address that the fourth AP 481 uses for direct and downstream communication with the client device 491. The data packets meant for the client device 491 reaches the client device from the first AP 403 traveling via the upstream communication interface 409 of the first AP 403, the first network node 411, the Internet backbone 421, the fourth node 451, the fourth AP 481, the second direct communication link between the fourth AP 481 and the client device 491 and communication interface 493 of the client device 491.

The first AP 403 may alternately decide to deliver a portion of the data packets directly to the client device 491 via the downstream communication interface 408 and remaining portion of the data packets indirectly to the client device 491 via the upstream communication interface 409 to balance the traffic load between the direct communication link and the fourth pathway. As an example the first AP 403 may send every alternate data packet from the data packets destined for the client device 491 directly via the downstream communication interface 408, while routes remaining of the data packets via the upstream communication interface 409. The client device 491 after receiving the data packets from the first AP 403 via the fourth AP 481, may decide to send a second plurality of data packets to the first AP 403 via the fourth AP 481 and/or via the direct communication link between the client device 491 and the first AP 403. As a way of example, the first AP 403 sends the data packets indirectly to the client device 491 via the fourth AP 481 to wake up the client device 491 from "inactive mode". The "inactive mode" of the client device 491 refers to a state of the client device 491 when the client device 491 does not respond to any communication via the direct communication link between the first AP 403 and the client device 491. The client device 491 that is in the "inactive mode" relative to the first AP 403 may wake up in response to the data packets from the first AP 403 and transmit the second plurality of data packets to the first AP 403 via the direct communication link. The first AP 403 and the client device 491 may subsequently use the direct communication link for packet data exchange.

In another embodiment the first AP 403 chooses to communicate with the client device 491 either directly via the downstream communication interface 408 or indirectly via the upstream communication interface 409, but not simultaneously. The first AP 403 uses the downstream communication interface 408 for exchanging data packets with the client device 491 by default. The first AP 403 looks into the user preferences, the communication characteristics and the protocol information corresponding to the four pathways between the client device 491 and the Internet backbone 421 at regular intervals and decides to use the upstream communication interface 409 (i.e., indirect path) instead of the downstream communication interface 408 (i.e., direct path) for communicating with the client device 491 if, for example, interference in the direct path goes below a preset value, bit error rate in the direct path exceeds a maximum allowable value, cost of the indirect path is less than the cost of the direct path, a user sets a preference for a download data rate that is achievable by the indirect path only etc. The first AP 403 changes its decision to use the direct path and/or the indirect path for communicating with the client device 491 with time depending on changes in the user preferences, the communication characteristics and the protocol information corresponding to the four pathways between the client device 491 and the Internet backbone 421 with time.

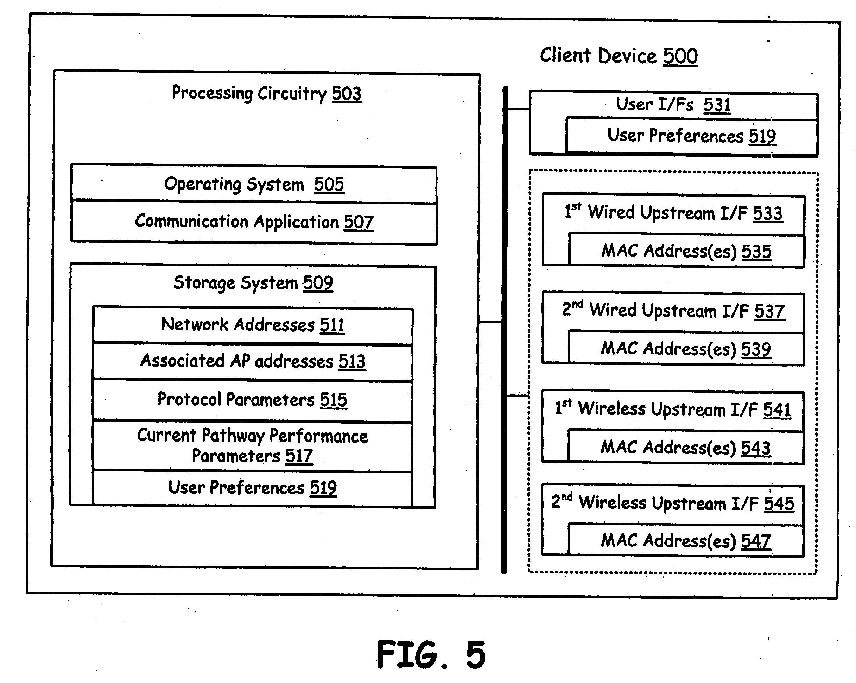

FIG. 5 is a schematic block diagram illustrating a plurality of components of a client device 500 that supports a plurality of packet switched data paths from the client device 500 to a plurality of associated access points. The client device 500 is typically a phone, a television, a laptop, a personal computer, a PDA, a headset, a printer, a video game box or any of a variety of device that is adapted to transmit and receive packet data. The client device 500 comprises a user input interface 531 that may typically be a mouse, a screen, a touch screen, a thumb pad, a pen, a voice based interface, a keyboard etc. For example if the client device 500 is a laptop then the user input interface 531 is typically a mouse and a keyboard. A user using the client device 500 enters user preferences 519 via the user input interface 531. The client device 500 stores the user preferences 519 in a storage system 509 of the client device 500.

The client device 500 comprises a first wired upstream interface 533, a second wired upstream interface 537, a first wireless upstream interface 541 and a second wireless upstream interface 545. Each of the wired and wireless interfaces (533, 537, 541 and 545) interacts with at least a corresponding hardware device, and the corresponding hardware device is uniquely identified by a medium access control (MAC) address. The corresponding hardware device typically comprises a transceiver. The transceiver is used to send and receive a plurality of packet data. The plurality of packet data may contain a video, a voice, a picture, a text, signaling information, control information or any of a variety of multimedia live and/or archived information that is fragmented into packets and encapsulated with destination address.

The client device 500 on power on attempts to associate itself with available packet data networks. The packet data networks are communicatively coupled to Internet backbone. As illustrated, the client device 500 comprises four communication interfaces i.e., 533, 537, 541 and 545 and the client device 500 is able to associate itself with a maximum of four packet data networks. The client device 500 associates itself with those packet data networks that support packet switched data communication protocol/s that are also supported by a processing circuitry 503 of the client device 500. For example and without limitation, the client device 500 associates itself with a first access point of a cable data network via the first wired upstream interface 533. Association with the first access point of the cable data network includes allocation of a first IP address by the first access point to the client device 500. The client device 500 uses the first IP address and the first wired upstream interface 533 to send data to the first access point and hence to the cable data network and receive data from the cable data network via the first access point. In this non-limiting example the client device 500 is in addition associated with a second access point of a fiber data network via the second wired upstream interface 537 and a second IP address. The client device 500 is further associated with a third access point that belongs to a satellite data network via the first wireless upstream interface 541 and a third IP address. The client device 500 is additionally associated with a fourth access point of an UMTS data network via the second wireless upstream interface 545 and a fourth IP address. The second IP address, the third IP address and the fourth IP address are assigned to the client device 500 by the second access point (i.e., the fiber data network), the third access point (i.e., the satellite data network) and the fourth access point (i.e., the UMTS network) respectively. The first IP address, the second IP address, the third IP address and the fourth IP address are collectively called network addresses 511. The client device 500 stores the network addresses 511 in the storage system 509.

The network addresses 511 are unique network addresses that are used by four access points, namely, the first AP, the second AP, the third AP and the fourth AP to transmit data packets directly to the client device 500. The first. AP encapsulates data packets destined for the client device 500 with the first IP address and transmits the encapsulated data packets. The client device 500 receives the encapsulated data packets via the first wired upstream interface 533 and reads information conveyed in the data packets. Similarly the second AP, the third AP and the fourth AP encapsulates data packets destined for the client device 500 with the second IP address, the third IP address and the fourth IP address respectively. The client device 500 is uniquely identified by the four access points using the network address 511 (i.e., the first IP address, the second IP address, the third IP address and the fourth IP address). The client device 500 similarly identifies the four access points using four unique AP addresses 513. The client device 500 receives the AP addresses 513 from the four access points at beginning of association. The client device stores the AP addresses in the storage system 509. If one or more associations of the client device 500 fails and/or is added due to, for example, movement of the client device 500, movement of access point, failure or introduction of a communication link, then corresponding IP address and AP address are removed from the storage system 509 and/or make entry into the storage system 509.

The client device 500 collects protocol parameters 515 associated with four pathways and stores in the storage system 509. The four pathways in this example comprises to a first pathway from the first wired upstream interface 533 of the client device 500 to the Internet backbone via the first AP and the cable data network, a second pathway from the second wired upstream interface 537 of the client device 500 to the Internet backbone via the second AP and the fiber data network, a third pathway from the first wireless upstream interface 541 of the client device 500 to the Internet backbone via the third AP and the satellite data network and a fourth pathway from the second wireless upstream interface 545 of the client device 500 to the Internet backbone via the fourth AP and the UMTS network. The client device 500 further collects current pathway performance parameters 517 corresponding to the four pathways and stores in the storage system 509.

The protocol parameters 515 associated with the four pathways may comprise bandwidth requirements, maximum data rate limitations, security information, quality of service information, encryption and/or decryption requirement, robustness against eavesdropping etc. associated with protocols used in the four pathways. In the example the protocols used in the four pathways may typically be a first protocol that is supported by the cable data network (for. e.g., Ethernet protocol), a second protocol that is supported by the fiber optic data network (for e.g., FDDI protocol); a third protocol that is supported by the satellite data network (for e.g., TCP/IP with some modifications in MAC layer) and a fourth protocol that is supported by the UMTS network (for e.g., WCDMA for the air-interface). Four protocols, the first protocol, the second protocol, the third protocol and the fourth protocol are communicatively incompatible with each other. The protocol parameters 515 associated with the four pathways may comprise bandwidth requirement of each of the four protocols, maximum upstream and downstream data rate supported by each of the four protocols, level of security supported by each of the four protocols, quality of service provided by each of the four protocols where quality of service may include latency and bit error vs. signal-to-noise performance of a protocol, encryption and/or decryption (if any) required by each of the four protocols, transmit power requirement for each of the four protocols.

The current pathway performance parameters 517 corresponding to the four pathways may comprise current performance of communication links between the client device 500 and immediate next network node along the four pathways i.e., the four access points. The current pathway performance parameters 517 comprise the current performance of four communication links between the client device 500 and the four access points i.e., the first wired link, the second wired link, the first wireless link and the second wireless link. The current pathway performance parameters 517 may include current data load on each of the four communication links, current noise and interference level in each of the four communication links, delay currently experienced by data packets in each of the four communication links, current cost of each of the four communication links, transmit power currently required at the client device 500 to maintain a predefined bit error rate on each of the four communication links etc. The current pathway performance parameters 517 at a first instant of time may be different from the same at a second instant of time. The client device 500 periodically updates the current pathway performance parameters 517 and replaces stored values of the pathway performance parameters in the storage system 509 with updated values.

The user preferences 519 received by the client device 500 via the user input interface 531 may comprise user identity, desirable downstream data rate, desirable cost, user preference for a protocol, user preference for a pathway etc. The user identity may identify a plurality of services that a user using the client device may avail of.

The client device 500 transmits the network addresses 511 (four IP addresses), the protocol parameters 515 associated with the four pathways, the current pathway performance parameters 517 corresponding to the four pathways and the user preferences 519 to each of the four access points, i.e., the first AP, the second AP, the third AP and the fourth AP. The first AP that belongs to the cable data network is aware that the client device 500 is additionally associated with the fiber optic data network, the satellite data network and the UMTS network. The first AP knows unique IP addresses assigned by the fiber optic data network i.e., the second AP, the satellite data network i.e., the third AP and the UMTS network i.e., the fourth AP to the client device 500. The first AP is not only aware of current performance of the first wired link between the client device 500 and the first AP, the first AP is further aware of current performance of the second wired link, the first wireless link and the second wireless link. The first AP is aware of capabilities and limitations of the fiber optic data network, the satellite data network and the UMTS network. The first AP is thus made aware of all network associations of the client device 500 and related parameters and the user preferences 519 of the client device 500. The second AP that belongs to the fiber optic data network is similarly aware that the client device 500 is additionally associated with the cable data network, the satellite data network and the UMTS network and associated IP addresses. The second AP is made aware of the protocol parameters and the current pathway performance parameters associated with all network associations of the client device 500 and the user preferences 519 set by the user. The client device 500 passes unique IP address, protocol parameters and current pathway parameters corresponding to a pathway between the client device 500 and the Internet backbone to all other pathways between the client device 500 and the Internet backbone.

At an instant the client device 500 may move to a location that is not serviced by the fourth AP. The client device 500 disassociates with the fourth AP. The client device 500 updates the network addresses 511, the associated AP addresses 513, the protocol parameters 515 and the current pathway performance parameters and sends updated protocol parameters and the current pathway performance parameters 517 to each of currently associated access points. The updated network addresses 511 comprise the first IP address, the second IP address and the third IP address, i.e., the fourth IP address is removed, the updated associated AP addresses 513 comprises all previous entries except address of fourth AP, the updated protocol parameters 515 comprise information corresponding to the first protocol, the second protocol and the third protocol. The updated current pathway performance parameters 517 comprise parameters associated with the first wired link, the second wired link and the first wireless link. The client device 500 sends the updated network addresses 511, the updated protocol parameters 515 and the updated current pathway performance parameters to each of the first AP, the second AP and the third AP. The first AP, the second AP and the third AP are thus made aware of disassociation of the client device 500 from the fourth AP.

At a subsequent instant of time the client device 500 may move to a different location that is serviced by a fifth AP that belongs to WiMax network. The client device 500 receives a fifth IP address from the fifth AP and stores in the storage system 509. The client device 500 collects and/or retrieves protocol parameters associated with the WiMax protocol and stores in the storage system 509. In addition the client device 500 gathers current pathway performance parameter associated with a fifth wireless link between the client device 500 and the fifth AP. The network addresses 511 at the subsequent instant of time refer to the first IP address, the second IP address, the third IP address and the fifth IP address of the client device 500. The associated AP addresses 513 at the subsequent instant of time refer addresses of the first AP, the second AP, the third AP and the fifth AP. The protocol parameters 515 at the subsequent instant of time refer to information related to the first protocol, the second protocol, the third protocol and the WiMax protocol. The current pathway performance parameters 517 at the subsequent instant of time refer to performance characteristics of the first wired link, the second wired link, the first wireless link and the third wireless link at the subsequent instant of time. The user preferences 519 remains same if the user does not make fresh entries via the user input interface 531 of the client device 500 at the subsequent instant of time.

The client device 500 sends the network addresses 511, the protocol parameters 515, the current pathway performance parameters 517 and the user preferences 519 to each of associated access points, i.e., the first AP, the second AP, the third AP and the fourth AP at the subsequent instant of time. Each of the first AP, the second AP, the third AP and the fifth AP are made aware of all other network associations of the client device 500 and parameters related to pathways between the client device 500 and the Internet backbone.

The processing circuitry 503 of the client device 500 may respond to a change in any of the network addresses 511, the protocol parameters 515, the current pathway performance parameters 517 and the user preferences 519 by updating the following parameters and sending updated parameters to currently associated access points. The processing circuitry 503 of the client device 500 may additionally update the network addresses 511, the protocol parameters 515, the current pathway performance parameters 517 and the user preferences 519 periodically and send updated parameters to currently associated access points.

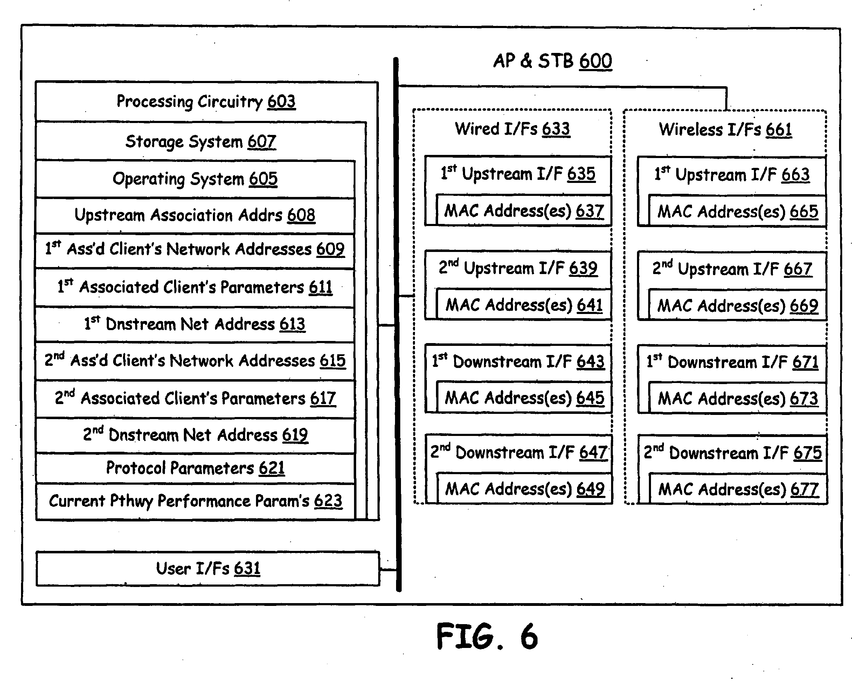

FIG. 6 is a schematic block diagram illustrating a plurality of components of an access point 600 that supports downstream packet switched data communication to at least one client device and upstream packet switched data communication to a backbone network. An access point (AP) is typically a transceiver that carries packet data from an end-point device (EPD) such as a phone, a personal computer, a PDA, a laptop, a headset, a video game box etc. to the backbone network via a packet switched data network. The packet data may be an audio, a video, a picture, an email, a web page, a music video, a file stored in an Internet and/or Intranet server, a text message, a television program and any of a variety of multimedia information fragmented into packets. One or more of a communication application such as a Web browsing application, a music downloading application, a video gaming application, an Internet telephony application etc. are running on the EPD. The communication application/s running on the EPD calls for uploading or downloading of packet data from the backbone network. An EPD is communicatively connected to the backbone network via an AP. For example, a music downloading application running on an EPD calls for downloading of a music file from a server that is communicatively connected to the backbone network. The AP receives the music file from the backbone network (i.e., the server) and forwards the music file to the EPD. The EPD sends packet data, if any, destined for the backbone network and/or the server to the AP and the AP forwards the packet data to destination. The EPD is said to be associated with the AP. The EPD and the AP agree to use a pair of unique network addresses for sending and receiving data packets among each other. A set top box (STB) that is typically used with a television may support packet switched data transmission and reception and act as a transceiver, i.e., the STB may carry data packets from a television to a server or a network node that belongs to a television channel service provider and vice versa. FIG. 6 illustrates the plurality of components that are common to the AP and the STB. The AP (or the STB) 600 comprises a processing circuitry 603, a user input interface 631, a plurality of wired interfaces 633 and a plurality of wireless interfaces 661. The processing circuitry 603 comprises a storage system 607. The user input interface 631 may be a plurality of buttons, a touch screen, a voice based interface, a mouse, a thumbwheel, a screen and a pen, a touchpad etc. The plurality of wired interfaces 633 comprise a first wired upstream interface 635, a second wired upstream interface 639, a first wired downstream interface 643 and a second wired downstream interface 647. The plurality of wireless interfaces 661 comprise a first wireless upstream interface 663, a second wireless upstream interface 667, a first wireless downstream interface 671 and a second wireless downstream interface 675.

The upstream interfaces (wired upstream and wireless upstream interfaces) of the AP (or the STB) 600 support packet data communication between the AP (or the STB) 600 and one or more immediate next upstream network node and the downstream interfaces (wired downstream and wireless downstream interfaces) support packet data communication between the AP (or the STB) 600 and one or more immediate next downstream end-point devices. A network node may be a router, a switch, a modem etc. that participates in packet data transport from an originating device to a destination device.

A typical EPD such as a laptop may be running a Web browsing application (i.e., the communication application) that calls for retrieval of a web page from a storage server. In the example the storage server is another EPD. The laptop and the storage server (i.e., the end-point devices) are communicatively connected to the Internet backbone via typically more than one access points. The access points to which the laptop and the storage server are communicatively connected may belong to same or a variety of industry standard or proprietary packet switched communicatively compatible and/or incompatible data networks such as fiber optic data network, cable data network, public switched telephone network, GSM network, CDMA network, EDGE network, UMTS network, IEEE 802.11 network, WiMax network, satellite data network etc.

The AP (or the STB) 600 communicates with a first node that belongs to a fiber optic data network using the first upstream wired interface 635, with a second node that belongs to a cable data network using the second upstream wired interface 639, with a third node that belongs to an EDGE network using the first upstream wireless interface 663 and with a fourth node that belongs to a WiMax network using the second upstream wireless interface 667. The fiber optic data network, the cable data network, the EDGE network and the WiMax network use different protocols for packet data transmission and reception. Each of the wired and wireless upstream interfaces (635, 639, 643 and 647) interacts with at least a corresponding hardware device in the AP (or the STB) 600, and the corresponding hardware device is uniquely identified by a medium access control (MAC) address. The corresponding hardware device typically comprises a transceiver. The AP (or the STB) 600 communicates with the first node, the second node, the third node and the fourth node using a first network address assigned by the fiber optic data network, a second network address assigned by the cable data network, a third network address assigned by the EDGE network and a fourth network address assigned by the WiMax network respectively. The first, the second, the third and the fourth network address i.e., network addresses 608 corresponding to upstream associations of the AP (or the STB) 600 are stored in the storage system 607 of the AP (or the STB) 600. The AP (or the STB) 600 communicates with the first node that belongs to the fiber optic data network via the first upstream wired interface 635 using the first network address.

The AP (or the STB) 600 has four downstream communication interfaces. The AP (or the STB) 600 may connect to a maximum of four downstream client devices at an instant of time. As an example the AP (or the STB) 600 interacts with a PC (personal computer) using the first wired downstream interface 643 and with a TV (television) using the second wired downstream interface 647. The AP (or the STB) 600 assigns a fifth network address to the PC and a sixth network address to the TV. In the example the AP (or the STB) 600 has only two downstream network associations. Each network association (upstream and downstream) between two devices is identified by a pair of unique network addresses, one for each of the two devices. Association of the AP (or the STB) 600 with the PC is identified by the fifth network address assigned to the PC and a first downstream network address 613 belonging to the AP (or the STB) 600. Association of the AP (or the STB) 600 with the TV is identified by the sixth network address assigned to the TV and a second downstream network address 619 belonging to the AP (or the STB) 600. The AP (or the STB) 600 communicates with the PC via the first wired downstream interface 643 and using the fifth network address and the first downstream network address 613. The AP (or the STB) 600 communicates with the TV via the second wired downstream interface 647 and using the sixth network address and the second downstream network address 619. The AP (or the STB) 600 stores the first downstream network address 613 and the second downstream network address 619 in the storage system 609.

The PC to which the AP (or the STB) 600 is associated via the first wired downstream interface 643 has associations with one or more additional access points. The PC is assigned unique network addresses by each of the access points with which the PC is communicatively connected. The PC sends all the unique network addresses 609 assigned to it by each of its associated access points to the AP (or the STB) 600 and the AP (or the STB) 600 receives the network addresses 609 via the first wired downstream interface 643. The AP (or the STB) 600 thus becomes aware of all network associations of the PC and corresponding network addresses 609 used by the PC. The TV to which the AP (or the STB) 600 is associated via the second wired downstream interface 647 has associations with one or more additional access points. The TV sends all unique network addresses 615 assigned to it by each of its associated access points to the AP (or the STB) 600 and the AP (or the STB) 600 receives the network addresses 615 via the second wired downstream interface 647. The AP (or the STB) 600 comes to know about all network associations of the TV and corresponding network addresses 615 used by the TV. The AP (or the STB) 600 stores the network addresses 609 used by the PC and the network addresses 615 used by the TV in the storage system 607.

The PC gathers protocol related parameters corresponding to all of its network associations, current performance parameters corresponding to all of its network associations and user-defined parameters and transmits all above mentioned parameters 611 to the AP (or the STB) 600 and the AP (or the STB) 600 stores PC parameters 611 received from the PC in the storage system 607. The AP (or the STB) 600 in addition receives protocol related parameters, current performance parameters and user-defined parameters corresponding to all network associations of the TV from the TV and stores the received TV parameters 617 in the storage system 607. The AP (or the STB) 600 may receive the PC parameters 611 and the TV parameters 617 periodically from the PC and the TV respectively. The AP (or the STB) 600 replaces stored values of the PC parameters 611 and the TV parameters 617 with currently received values.

The AP (or the STB) 600 collects protocol parameters corresponding to protocols that are used for packet data exchange between the AP (or the STB) 600 and associated upstream network nodes (i.e., the first node, the second node, the third node and the fourth node). The AP (or the STB) 600 stores the collected protocol parameters 621 in the storage system 607. The protocol parameters 621 may comprise version number, bandwidth requirement, available data rate, transmit power requirement, supported quality of service, security information corresponding to protocols used in the fiber optic data network, in the cable data network, in the EDGE network and in the WiMax network. The AP (or the STB) 600 in addition collects current pathway performance parameters 623 corresponding to communication links between the AP (or the STB) 600 and the upstream associated network nodes (i.e., the first node, the second node, the third node and the fourth node) and stores the collected current pathway performance parameters 623 in the storage system 607.

The AP (or the STB) 600 uses both a direct downstream path to an associated EPD and an indirect path via an upstream communication interface to the associated EPD for sending data packets to the associated EPD. As an example the AP (or the STB) 600 sends data packets destined for the PC directly to the PC (i.e., EPD) via the first wired downstream interface 643 be default. The AP (or the STB) 600 uses, for example, fiber optic data network for direct communication with the PC via the first wired downstream interface 643. The PC is in addition communicatively coupled with a second AP that uses IEEE 802.11 standard for direct communication with the PC via one of its downstream interfaces. The AP (or the STB) 600 in addition may route the data packets destined for the PC via one of its upstream communication interfaces (635, 639, 663 and 667). The AP (or the STB) 600 may route the data packets via, for example, the first upstream wired interface 635 instead of sending the data packets to the PC via the first wired downstream interface 643. The data packets sent out from the first upstream wired interface 635 reach the first node and from there reach the Internet backbone via the fiber optic data network. The second AP with which the PC is associated is also communicatively connected to the Internet backbone. The data packets ultimately reach the PC from the Internet backbone via the second AP. The AP (or the STB) 600 may perform the routing using the PC parameters 611. The AP (or the STB) 600 may perform the routing when, for example, direct path between the first wired downstream interface 643 and the PC experiences a higher interference than indirect path via the Internet backbone and the second AP, delay along the direct path exceeds an allowable value, user sets a preference for a protocol that is used in the indirect path, data transfer rate along the indirect path is more than that along the direct path etc. The AP (or the STB) 600 may use the direct path and the indirect path simultaneously for delivery of packet data. The AP (or the STB) 600 may deliver a first potion of a stream of packet data via the direct path and may deliver remaining portion of the stream of packet data via the indirect path. The AP (or the STB) 600 may use the indirect path for delivery of a particular type of data and/or for particular purpose, for example, for delivering command data to the PC, for searching for the PC etc. The AP (or the STB) 600 may use the indirect path to deliver the AP & the PC association related information to the PC when the direct path to the PC is not available.

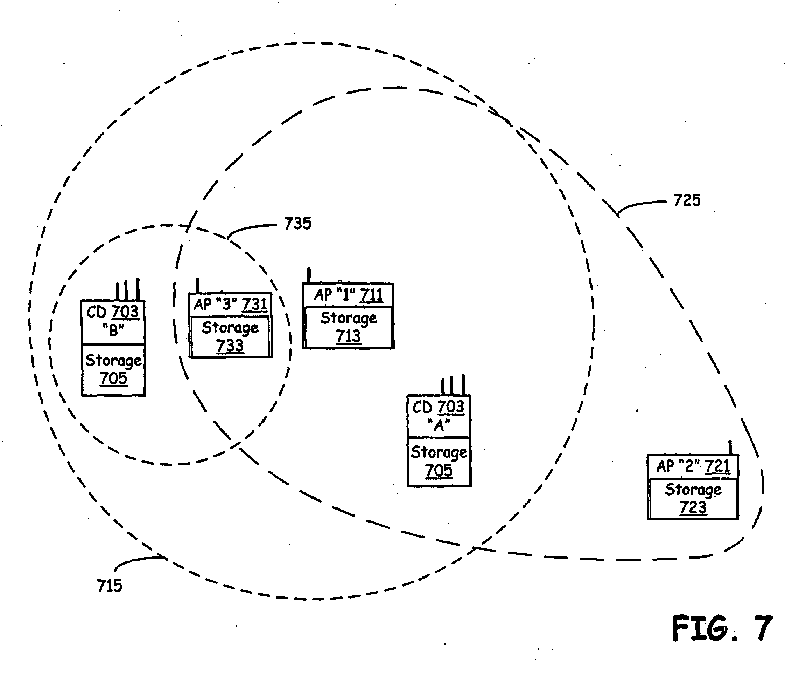

FIG. 7 is a schematic that shows interaction of an access point 721 with a mobile client device 703 via other access points 711 and 731 even after the mobile client device 703 moves out of coverage area of the access point 721. A first access point (AP) 711 covers a geographical area 715. A second AP 721 covers a geographical area 725. A third AP 731 covers a geographical area 735. The mobile client device 703 is associated with the first AP 711 if the mobile client device 703 is located within the geographical area 715. The mobile client device 703 may be a phone, a PDA, a laptop, a headset etc. At an instant of time "A", the mobile client device 703 is located in a region that is common to the geographical area 715 and the geographical area 725. The mobile client device 703 at the instant "A" is associated with the first AP 711 and the second AP 721. The mobile client device 703 is assigned a first IP address and a second IP address respectively by the first AP 711 and the second AP 721. The mobile client device 703 sends the first IP address and the second IP address to each of the first AP 711 and the second AP 721. The first AP 711 is made aware of the second IP address that the second AP 721 uses to communicate directly with the mobile client device 703. The second AP 721 is in addition made aware of the first IP address that the first AP 711 uses to communicate directly with the mobile client device 703.

At an instant of time "B", the mobile client device 703 is located in a region that is common to the geographical area 715 and the geographical area 735. The mobile client device 703 at the instant "B" is associated with the first AP 711 and the third AP 731. The third AP 731 assigns a third IP address to the mobile client device 703 and the third AP 731 uses the third IP address to communicate directly with the mobile client device 703. The mobile client device 703 sends the third IP address to the first AP 711 and the first IP address to the third AP 731. The first AP 711 is aware of the third IP address that the third AP 731 uses for direct communication with the mobile client device 703.

The first AP 711, the second AP 721 and the third AP 731 are communicatively connected to a backbone network. At the instant "B", the second AP 721 desires to send a plurality of data packet to the mobile client device 703. The second AP 721 determines that no direct communication path exists between the second AP 721 and the mobile client device 703 as the mobile client device 703 has moved out of coverage area of the second AP 721. The second AP 721 is not able to communicate directly with the mobile client device 703 using the second IP address. The second AP 721 is aware of the first IP address that the first AP 711 uses to communicate directly with the mobile client device 703. The second AP 721 at the instant "B" encapsulates the plurality of data packets with the first IP address and sends the encapsulated plurality of data packets to the backbone network. The backbone network broadcasts the encapsulated plurality of data packets to all network nodes including all access points. The encapsulated plurality of data packets reaches the first AP 711 and the third AP 731 from the backbone network. The first AP 711 is adapted to forward the encapsulated plurality of data packets to the mobile client device 703. The third AP 731 discards the encapsulated plurality of data packets as the third AP 731 is not adapted to send data packets to the mobile client device 703 using the first IP address. The plurality of data packets reaches the mobile client device 703 from the second AP 721 via the backbone network and the first AP 711. The second AP 721 uses an indirect route for sending the plurality of data packets to the mobile client device 703 due to unavailability of the direct communication path between the second AP 721 and the mobile client device 703 at the instant "B". The indirect route from the second AP 721 to the mobile client device 703 comprises the backbone network and the first AP 711.

The first AP 711 at the instant "B" may send a second plurality of data packets to the mobile client device 703 directly and/or may deliver the second plurality of data packets to the mobile client device 703 via the backbone network and the third AP 731. The first AP 711, depending on status of the mobile client device 703 and communication characteristics of all current pathways between the mobile client device 703 and the backbone network, may choose to deliver the second plurality of data packets to the mobile client device 703 via the third AP 731 instead of sending the second plurality of data packets directly. As an example, the mobile client device 703 might not have sent and received data packets from the first AP 711 for a long duration of time and as a result might have gone to "sleep mode" to save battery power of the mobile client device 703. The mobile client device 703 at the second instant "B" does not respond to any data packet reaching mobile client device 703 with the first IP address as the mobile client device 703 is in the "sleep mode" relative to the first AP 711. The first AP 711 at the instant "B" is thus unable to reach the mobile client device 703 via a direct path. The first AP 711 encapsulates the second plurality of data packets destined for the mobile client device 703 using the third IP address and routes the second plurality of data packets to the mobile client device 703 via the backbone network and the third AP 731. Once the mobile client device 703 wakes up from the "sleep mode", the mobile client device 703 and the first AP 711 may agree to use the first IP address for further direct communication between each other.

The first AP 711 may be adapted to switch between the direct path i.e., the first IP address and the indirect path i.e., the third IP address, for communication with the mobile client device 703 depending on the communication characteristics of all current pathways between the mobile client device 703 and the backbone network. The first AP 711 may be adapted to use the direct path when maximum delay tolerable by the packet data is below a preset value and to use the indirect path for all other situations. The first AP 711 1 may in addition be adapted to use high priority data packets simultaneously via the direct path and the indirect path to ensure that the high priority data packets reach the mobile client device 703 via any of available paths. The first AP 711 may use the indirect path to send association related signals to the mobile client device 703 prior to association and/or during initial association of the first AP 711 with the mobile client device 703. The first AP 711 may choose to use the indirect path for delivering data packets to the mobile client device 703 in response to a request received from the mobile client device 703 via the indirect path.

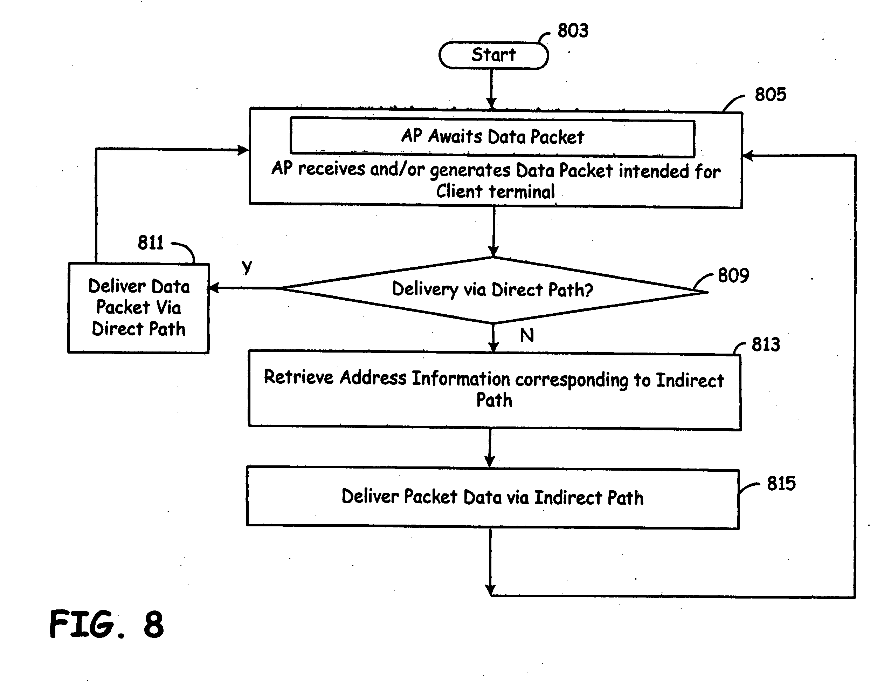

FIG. 8 is a flow chart illustrating a method of delivering data packet to a client terminal via direct path or indirect path by an access point. The method starts at block 803. The access point (AP) awaits a data packet that is destined for the client terminal in a next block 805. The AP is communicatively connected to the downstream client terminal and in addition is communicatively coupled to a backbone network that is typically an Internet backbone via an upstream network node. The upstream network node may be a router, a switch, a modem, a server, a service provider equipment etc. The AP is adapted to exchange data packets with the downstream client terminal in addition to exchanging data packets with the upstream network node. The downstream client terminal is typically a laptop, PC, phone, video game box, television, PDA etc. that is adapted to handle any of a variety of live and/or archived multimedia information fragmented into packets. The AP may receive the data packet from the upstream network node and/or may generate the data packet. For example, a Web browsing application may be running on the client terminal. The Web browsing application calls for downloading of a web page from a Web server that is communicatively connected to the backbone network. The AP receives a plurality of data packets that contain the requested web page (i.e., the multimedia information) from the Web server via the upstream network node. The plurality of data packets containing the requested web page are destined for the client terminal. The AP is adapted to deliver the plurality of data packets to the client terminal. As another example, the AP may desire to send signaling information, control information, AP information, and a request etc. to the client terminal. The AP is adapted to fragment the information intended for the client terminal into packets and deliver the packets to the client terminal.

The AP decides in a next block 809 whether the AP will deliver the data packet destined for the downstream client terminal via a direct path. The direct path refers to a path between the AP and the client terminal. The AP uses a unique network address that is typically an IP address, to send data packets to the client terminal via the direct path. The direct path may be a wireless or a wired physical link and the direct path does not comprise any network node. If the AP decides to use the direct path for delivery of the data packet to the client terminal then the AP encapsulates the data packet with the unique network address and transmits the encapsulated data packet as shown in a block 811. If the AP decides to use an indirect path for delivery of the data packet to the client terminal then the method flow goes to a block 813.

The AP may decide to use the indirect path when the direct path is not available and/or the direct path is down. Alternately the AP may decide to use the indirect path even when the direct path is available depending on current performance of the direct path and the indirect path, status of the client terminal, type of the data packet, user preferences, advantages and limitations of protocols that are used along the direct path and the indirect path etc. As an example, the AP may use the indirect path to send a participation request to the client terminal that is hitherto not associated with the AP. The AP and the client terminal may exchange information pertaining to registration of the client terminal with the AP via the indirect path. Once the client terminal is registered with the AP, the AP may use the direct path for subsequent communication with the client terminal. The AP may decide to use the direct path for sending packet data containing multimedia information to the client terminal while may use the indirect path for delivering packet data containing control, command and signaling information to the client terminal.

The client terminal may typically be associated with one or more access points in addition to the AP. Association of the client terminal with an access point comprises the access point assigning a unique network address to the client terminal and the access point and the client terminal agreeing to use the unique network address for exchanging data packets between them. Subsequently the associated access point appends the unique network address to all data packets intended for the client terminal prior to transmitting them. The client device recognizes the all data packets appended with the unique network address to be arriving from the associated access point and hence receives them. Communication of the associated access point with the client terminal using the agreed upon unique network address is referred to as direct communication between the associated access point and the client terminal.

In the block 813, the AP is expected to route the data packet that it received and/or generated in the block 805 to the client terminal via an indirect path. The AP has other network addresses of the client terminal corresponding to its other associations stored in a memory of the AP. The AP retrieves the other network addresses from the memory in the block 813. The AP selects one address from the other network addresses. The selected address may be an address that has been assigned by a second AP to the client terminal. In a next step 815 the AP appends the data packet with the selected network address and transmits the data packet to the upstream network node. The AP, the upstream network node and all other nodes in the backbone network are not aware of address or location of the second AP. The AP may request broadcasting of the data packet appended with the selected network address. The data packet appended with the selected network address goes to the backbone network and from the backbone network ultimately reaches the second AP. The second AP is adapted to send data packets to the client terminal appended with the selected network address because the selected network address corresponds to association of the client terminal with the second AP. The second AP subsequently sends the data packet appended with the selected network address to the client terminal. The data packet destined for the client terminal reaches the client terminal from the AP via the indirect path that comprises the upstream network node, the backbone network and the second AP.

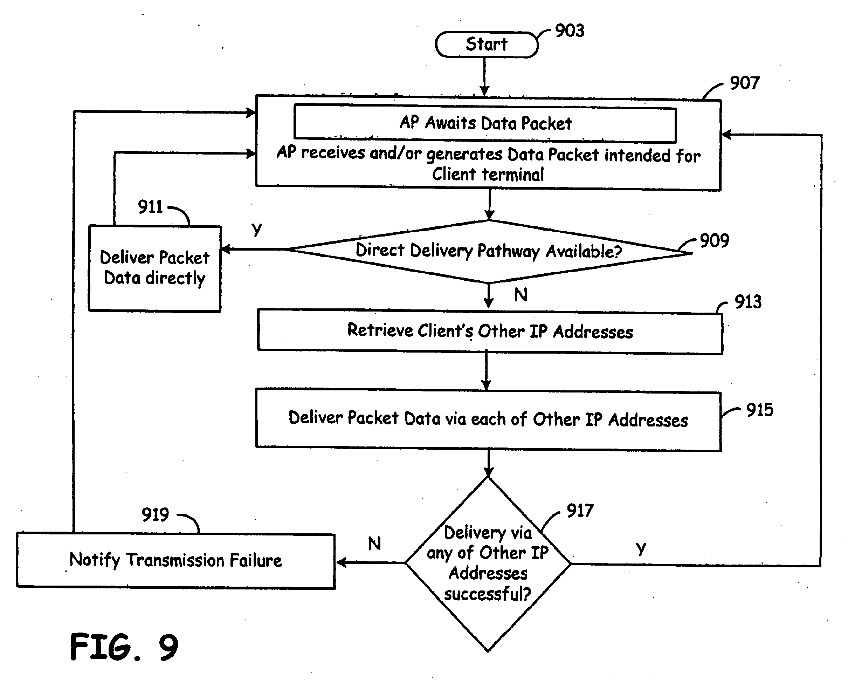

FIG. 9 is a flow chart illustrating the method of delivering the data packet to the client terminal of FIG. 8 by the access point wherein the access point attempts to deliver the data packet via all available paths to the client terminal. The method starts at block 903. An AP is communicatively connected to an upstream network node via an upstream communication interface where the upstream network node is communicatively connected to a backbone network. The backbone network is typically an Internet backbone. The AP is in addition communicatively connected to the client terminal via a downstream communication interface where the client terminal is typically a PC, a laptop, a video game box, a headset, a television, a phone etc. A communication application, such as Internet telephony, video gaming, music downloading, Web browsing etc. running on the client terminal calls for exchange of data packets with, for example, another client terminal, a server, and/or service provider equipment that is communicatively connected to the Internet backbone. The client terminal i.e., the data packets generated by the communication application running on the client terminal reaches another client terminal, the server and/or the service provider equipment, collectively called a destination device, via the AP. The client terminal sends the data packets destined for the destination device to the AP. The AP sends the data packets destined for the destination device to the Internet backbone using the upstream communication interface. The Internet backbone then sends the data packets to the destination device. The data packets are appended with the a destination address and each network node along route of travel of the data packets from the client terminal to the destination device reads the destination address appended to the data packets and routes the data packets to appropriate next network node. A second plurality of data packets reaches the client terminal from the destination device via the Internet backbone and the AP. The AP receives the second plurality of data packets from the Internet backbone via the upstream communication interface. The AP appends the second plurality of data packets with a first IP address before transmitting the second plurality of data packets via the downstream network interface. The client terminal upon receiving the second plurality of data packets reads the first IP address and recognizes the second plurality of data packets to be arriving from the AP.

The client terminal is typically communicatively connected to other access points in addition to being communicatively connected to the AP. Each of the other access points uses different IP address for sending data packets to the client terminal. An association of the client terminal with each of the other access points is identified by corresponding IP address. In The exemplary case, association of the client terminal with the AP is identified by the first IP address. Associations of the client terminal with the other access points are identified by a plurality of IP addresses. The AP has a direct path to the client terminal via the downstream communication interface of the AP and has a plurality of indirect paths to the client terminal where each of the plurality of indirect paths comprise the upstream communication interface, the Internet backbone and one of the other access points.

The AP receives and/or generates a packet data destined for the client terminal in a block 907. If the AP decides to send the packet data directly to the client terminal, then the AP encapsulates the packet data with the first IP address and transmits the encapsulated data packet via the downstream communication interface in block 911. If the AP decides to send the packet data indirectly to the client terminal then the AP retrieves the plurality of IP addresses that correspond to associations of the client terminal with the other access points in a step 913. The AP has the plurality of IP addresses stored in a memory of the AP. The AP creates multiple copies of the packet data where each copy of the packet data is encapsulated with one of the plurality of IP addresses. The AP sends the encapsulated packet data via the upstream communication interface to the upstream network node, one at a time as shown in the next block 915. Each of the encapsulated packet data reaches the client terminal via one of the other access points. The AP by routing the packet data via each of the indirect paths ensures that the client terminal receives the packet data. If the client terminal does not respond to none of the copies of the packet data, which may happen when the client terminal is in "sleep mode" relative to all of the other access points then the AP notifies a transmission failure as shown in step 919 and awaits a next packet data.

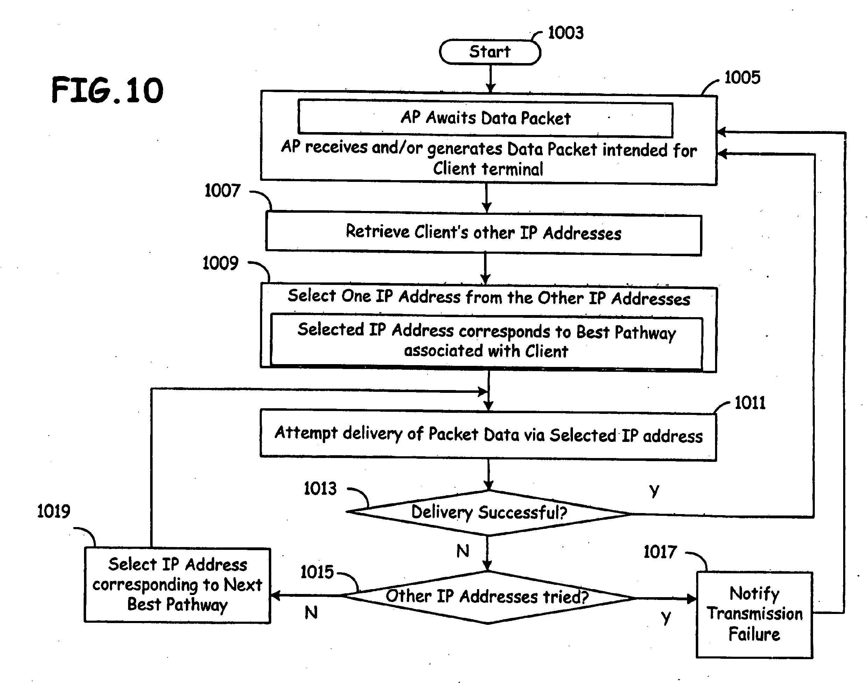

FIG. 10 is a flow chart illustrating the method of delivering the data packet to the client terminal of FIG. 8 by the access point via an indirect pathway wherein the indirect pathway is selected from all available indirect pathways to the client terminal based on a communication characteristic. The method starts in block 1003. The access point (AP) receives and/or generates data packet intended for the client terminal in a block 1005. The client terminal with which the AP is associated, is associated with a plurality of access points additionally. Each of the plurality of access points assigns a unique IP address to the client terminal at the beginning of association and sends data packets to the client terminal using the unique IP address. A first AP from the plurality of access points sends data packets to the client terminal using a first IP address. A second AP from the plurality of access points sends data packets to the client terminal using a second IP address. There is a plurality of IP addresses corresponding to associations of the client terminal with the plurality of access points.

The AP has a direct downstream path to the client terminal via a downstream communication interface of the AP. The AP has a plurality of upstream indirect pathways to the client terminal where each of the indirect pathways comprises upstream communication interface of the AP, an Internet backbone and one of the plurality of access points. As an example, a first indirect upstream pathway from the AP to the client terminal comprises the upstream communication interface of the AP, the Internet backbone and first AP from the plurality of access points. Similarly a second indirect upstream pathway from the AP to the client terminal comprises the upstream communication interface of the AP, the Internet backbone and second AP from the plurality of access points. The plurality of upstream indirect pathways are so called because the data packets delivered via the pathways originate or terminate in the upstream communication interface of the AP.

In a step 1007, the AP retrieves the plurality of IP addresses from storage of the AP. The AP receives the plurality of IP addresses from the client terminal when the AP associates itself with the client terminal. The AP in addition receives pathway characteristics corresponding to all routes of the client terminal to the Internet backbone, user preferences, and protocol parameters corresponding to all protocols used in the all routes. The AP in a next step 1009 selects an indirect upstream pathway from the plurality of upstream indirect pathways. The AP performs the selection in the step 1009 based on the pathway characteristics, the user preferences and the protocol parameters. As an example the AP may be adapted to select an indirect pathway that offers least interference among the plurality of indirect upstream pathways. The AP may alternately be adapted to select an indirect pathway that offers highest download data rate among the plurality of indirect upstream pathways. The selected indirect pathway is best among the plurality of indirect upstream pathways at the instant of selection. The AP in a next step 1011 routes the data packet via the selected indirect pathway. For example, if the AP selects the first indirect pathway from the plurality of indirect upstream pathways then the AP encapsulates the data packet with the first IP address and delivers the encapsulated data packet to the Internet backbone via the upstream communication interface of the AP. The encapsulated data packet ultimately reaches the client terminal via the first AP.

If the AP determines that the data packet has not been delivered to the client terminal via the selected indirect pathway in a step 1013, then the AP selects another indirect pathway from remaining of the plurality of indirect upstream pathways. The another indirect pathway corresponds is best among the remaining of the plurality of indirect upstream pathways at the instant of second selection. In a block 1019 the AP attempts to deliver the data packet to the client terminal via the other indirect pathway. The AP tries out all of the plurality of indirect upstream pathways, one at a time, and declares a transmission failure if attempt to deliver the data packet to the client terminal via the all of the plurality of indirect upstream pathways fails as shown in a block 1017.

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope of the claimed invention.

One of average skill in the art will also recognize that the functional building blocks, and other illustrative blocks, modules and components herein, can be implemented as illustrated or by discrete components, application specific integrated circuits, processors executing appropriate software and the like or any combination thereof.

Moreover, although described in detail for purposes of clarity and understanding by way of the aforementioned embodiments, the present invention is not limited to such embodiments. It will be obvious to one of average skill in the art that various changes and modifications may be practiced within the scope of the invention, as limited only by the scope of the appended claims.

## Claims

1. A communication infrastructure supporting packet switched communications, the communication infrastructure comprising:
a backbone network (203) supporting packet switched communication;
a first wireless area network (205) operating pursuant to a first wireless protocol;
a second wireless area network (221) operating pursuant to a second wireless protocol that is communicatively incompatible with the first wireless protocol;
a first access point (241) that is configured to manage the first wireless area network (205), and is communicatively coupled to the backbone network (203);
a second access point (261) that is configured to manage the second wireless area network (221), and is communicatively coupled to the backbone network (203);
a client device (281) having a first network identifier (289), the client device (281) is configured to communicate with the first access point (241) using the first network identifier (289);
the client device (281) having a second network identifier (291), the client device (281) is configured to communicate with the second access point (261) using the second network identifier (291);
the first access point (241) is configured to store the first network identifier (289) and the second network identifier (291) of the client device (281); and
the first access point (241) is configured to wirelessly transmit first data packets to the client device (281) using the first network identifier (289) and to route second data packets using the second network identifier (291) via the backbone network (203) and the second access point (261) to the client device (281).

2. The communication infrastructure of claim 1, wherein the first wireless area network (205) is communicatively incompatible with the second wireless area network (221).

3. The communication infrastructure of claim 1, wherein the first access point (241) is configured to perform the routing of the second data packets based on a communication characteristic.

4. An access point (403) in a communication infrastructure, the communication infrastructure having a backbone network (421) and a destination device (491), the access point (403) comprising:
an upstream communication interface (408) communicatively coupled to the backbone network (421);
a downstream communication interface (409) communicatively coupled to the destination device (491);
a storage (407) that contains both a first network address associated with the destination device (491) and a second network address associated with the destination device (491);
a processing circuitry (405) communicatively coupled to the storage (407), the upstream communication interface (408), and the downstream communication interface (409);
the processing circuitry (405) is configured to direct communication to the destination device (491) both via the downstream communication interface (409) using the first network address and via the upstream communication interface (408) and the backbone network (421) using the second network address.

5. The access point (403) of claim 4, wherein the downstream communication interface (409) has priority over the upstream communication interface (408).

6. The access point (403) of claim 4, wherein the communications directed to the destination device (491) comprising a first type of data packet and a second type of data packet, and the upstream communication interface (408) is used to deliver the first type of data packet while the downstream communication interface (409) is used to deliver the second type of data packet.

7. The access.point (403) of claim 6, wherein a difference between the first type of data packet and the second type of data packet comprising a quality of service difference.

8. A communication infrastructure comprising:
a packet switched backbone network (203);
a first service provider network (205) communicatively coupled to the packet switched backbone network (203);
a second service provider network (221) communicatively coupled to the packet switched backbone network (203);
a first access point (241), communicatively coupled to the first service provider network (205), that is configured to use a first protocol to manage a first wireless network;
a second access point (261), communicatively coupled to the second service provider network (221), that is configured to use a second protocol to manage a second wireless network;
a destination device having both a first wireless transceiver for associating with the first access point (241) and a second wireless transceiver for associating with the second access point (261), the first wireless transceiver having a first network address, and the second wireless transceiver having a second network address;
a first source device that is configured to deliver a first plurality of packets through the packet switched backbone network (203), each of the first plurality of packets including the first network address; and
the first access point (241) is configured to receive the first plurality of packets via the first service provider network (205), and, for each of the first plurality of packets, the first access point (241) is configured to select delivery to the destination device either via the first wireless network to the first wireless transceiver or via routing through the packet switched backbone network (203), the second service provider network (221), the second access point (261), and the second wireless network to the second wireless transceiver using the second network address.

9. The communication infrastructure of claim 8, wherein the first protocol is communicatively incompatible with the second protocol.

10. A method performed by a first access point (241) that delivers a data packet to a client device (281) in a communication infrastructure having a backbone network (203) and a second access point (261), the first access point (241) and the second access point (261) are both communicatively coupled to the backbone network (203), the first access point (241) manages a first downstream network using a first protocol, the second access point (261) manages a second downstream network using a second protocol, the first protocol and the second protocol being communicatively incompatible, the method comprising:
storing a first network address and a second network address both assigned to the client device (281), the first network address being associated with the first downstream network, and the second network address being associated with the second downstream network;
selecting, based on at least one communication characteristic, to deliver the data packet to the client device (281) either directly through the first downstream network or indirectly through the second downstream network via the backbone network (203) and the second access point (261); and
delivering the data packet pursuant to the selection.

## Patentansprüche

1. Kommunikationsinfrastruktur, die paketgeschaltete Kommunikationen unterstützt, wobei die Kommunikationsinfrastruktur aufweist:
eine Hauptleitung (203), die paketgeschaltete Kommunikation unterstützt;
ein erstes Wireless Area Network (drahtloses Bereichsnetzwerk) (205), das nach einem ersten Wireless Protocol (Drahtlosprotokoll) arbeitet;
ein zweites Wireless Area Network (221), das nach einem zweiten Wireless Protocol arbeitet, das mit dem ersten Wireless Protocol kommunikativ inkompatibel ist;
einen ersten Zugriffspunkt (241), der so konfiguriert ist, dass er das erste Wireless Area Network (205) verwaltet, und der kommunikativ an die Hauptleitung (203) gekoppelt ist;
einen zweiten Zugriffspunkt (261), der so konfiguriert ist, dass er das zweite Wireless Area Network (221) verwaltet, und der kommunikativ an die Hauptleitung (203) gekoppelt ist;
eine Client-Vorrichtung (281) mit einem ersten Netzwerk-Identifizierer (289), wobei die Client-Vorrichtung (281) so konfiguriert ist, dass sie mittels des ersten Netzwerk-Identifizierers (289) mit dem ersten Zugriffspunkt (241) kommuniziert;
wobei die Client-Vorrichtung (281) einen zweiten Netzwerk-Identifizierer (291) hat, wobei die Client-Vorrichtung (281) so konfiguriert ist, dass sie mittels des zweiten Netzwerk-Identifizierers (291) mit dem zweiten Zugriffspunkt (261) kommuniziert;
wobei der erste Zugriffspunkt (241) so konfiguriert ist, dass er den ersten Netzwerk-Identifizierer (289) und den zweiten Netzwerk-Identifizierer (291) der Client-Vorrichtung (281) speichert; und
wobei der erste Zugriffspunkt (241) so konfiguriert ist, dass er erste Datenpakete drahtlos an die Client-Vorrichtung (281) mittels des ersten Netzwerk-Identifizierers (289) sendet und zweite Datenpakete mittels des zweiten Netzwerk-Identifizierers (291) über die Hauptleitung (203) und den zweiten Zugriffspunkt (261) an die Client-Vorrichtung (281) routet.

2. Kommunikationsinfrastruktur nach Anspruch 1, wobei das erste Wireless Area Network (205) mit dem zweiten Wireless Area Network (221) kommunikativ inkompatibel ist.

3. Kommunikationsinfrastruktur nach Anspruch 1, wobei der erste Zugriffspunkt (241) so konfiguriert ist, dass er das Routen der zweiten Datenpakete basierend auf einem Kommunikationsmerkmal durchführt.

4. Zugriffspunkt (403) in einer Kommunikationsinfrastruktur, wobei die Kommunikationsinfrastruktur eine Hauptleitung (421) und eine Zielvorrichtung (491) aufweist, wobei der Zugriffspunkt (403) aufweist:
eine vorgeschaltete Kommunikationsschnittstelle (408), die kommunikativ an die Hauptleitung (421) gekoppelt ist;
eine nachgeschaltete Kommunikationsschnittstelle (409), die kommunikativ an die Zielvorrichtung (491) gekoppelt ist;
einen Speicher (407), der sowohl eine erste Netzwerkadresse enthält, die mit der Zielvorrichtung (491) assoziiert ist, als auch eine zweite Netzwerkadresse, die mit der Zielvorrichtung (491) assoziiert ist;
eine Verarbeitungsschaltung (405), die kommunikativ an den Speicher (407), die vorgeschaltete Kommunikationsschnittstelle (408) und die nachgeschaltete Kommunikationsschnittstelle (409) gekoppelt i st;
wobei die Verarbeitungsschaltung (405) so konfiguriert ist, dass sie die Kommunikation an die Zielvorrichtung (491) sowohl über die nachgeschaltete Kommunikationsschnittstelle (409) mittels der ersten Netzwerkadresse als auch über die vorgeschaltete Kommunikationsschnittstelle (408) und die Hauptleitung (421) mittels der zweiten Netzwerkadresse richtet.

5. Zugriffspunkt (403) nach Anspruch 4, wobei die nachgeschaltete Kommunikationsschnittstelle (409) Priorität über die vorgeschaltete Kommunikationsschnittstelle (408) hat.

6. Zugriffspunkt (403) nach Anspruch 4, wobei die an die Zielvorrichtung (491) gerichteten Kommunikationen eine erste Art von Datenpaket und eine zweite Art von Datenpaket aufweisen, und wobei die vorgeschaltete Kommunikationsschnittstelle (408) verwendet wird, um die erste Art von Datenpaket zu liefern, während die nachgeschaltete Kommunikationsschnittstelle (409) verwendet wird, um die zweite Art von Datenpaket zu liefern.

7. Zugriffspunkt (403) nach Anspruch 6, wobei der Unterschied zwischen der ersten Art von Datenpaket und der zweiten Art von Datenpaket einen Dienstgüte-Unterschied umfasst.

8. Kommunikationsinfrastruktur, die aufweist:
eine paketgeschaltete Hauptleitung (203);
ein erstes Dienstanbieter-Netzwerk (205), das kommunikativ an die paketgeschaltete Hauptleitung (203) gekoppelt ist;
ein zweites Dienstanbieter-Netzwerk (221), das kommunikativ an die paketgeschaltete Hauptleitung (203) gekoppelt ist;
einen ersten Zugriffspunkt (241), der kommunikativ an das erste Dienstanbieter-Netzwerk (205) gekoppelt ist, und der so konfiguriert ist, dass er ein erstes Protokoll verwendet, um ein erstes drahtloses Netzwerk zu verwalten;
einen zweiten Zugriffspunkt (261), der kommunikativ an das zweite Dienstanbieter-Netzwerk (221) gekoppelt ist, und der so konfiguriert ist, dass er ein zweites Protokoll verwendet, um ein zweites drahtloses Netzwerk zu verwalten;
eine Zielvorrichtung, die sowohl einen ersten drahtlosen Transceiver zum Assoziieren mit dem ersten Zugriffspunkt (241) als auch einen zweiten drahtlosen Transceiver zum Assoziieren mit dem zweiten Zugriffspunkt (261) aufweist, wobei der erste drahtlose Transceiver eine erste Netzwerkadresse und der zweite drahtlose Transceiver eine zweite Netzwerkadresse hat;
eine erste Quellenvorrichtung, die so konfiguriert ist, dass sie eine erste Vielzahl von Paketen durch die paketgeschaltete Hauptleitung (203) liefert, wobei jedes der ersten Vielzahl von Paketen die erste Netzwerkadresse enthält; und
wobei der erste Zugriffspunkt (241) so konfiguriert ist, dass er die erste Vielzahl von Paketen über das erste Dienstanbieter-Netzwerk (205) empfängt, und wobei, für jedes der ersten Vielzahl von Paketen, der erste Zugriffspunkt (241) so konfiguriert ist, dass er die Lieferung an die Zielvorrichtung entweder über das erste drahtlose Netzwerk an den ersten drahtlosen Transceiver oder über Routen durch die paketgeschaltete Hauptleitung (203), das zweite Dienstanbieter-Netzwerk (221), den zweiten Zugriffspunkt (261) und das zweite drahtlose Netzwerk an den zweiten drahtlosen Transceiver mittels der zweiten Netzwerkadresse auswählt.

9. Kommunikationsinfrastruktur nach Anspruch 8, wobei das erste Protokoll mit dem zweiten Protokoll kommunikativ inkompatibel ist.

10. Verfahren, das von einem ersten Zugriffspunkt (241) durchgeführt wird, der ein Datenpaket an eine Client-Vorrichtung (281) in einer Kommunikationsstruktur liefert, die eine Hauptleitung (203) und einen zweiten Zugriffspunkt (261) aufweist, wobei der erste Zugriffspunkt (241) und der zweite Zugriffspunkt (261) beide kommunikativ mit der Hauptleitung (203) verbunden sind, der erste Zugriffspunkt (241) ein erstes nachgeschaltetes Netzwerk mittels eines ersten Protokolls verwaltet, der zweite Zugriffspunkt (261) ein zweites nachgeschaltetes Netzwerk mittels eines zweiten Protokolls verwaltet, wobei das erste Protokoll und das zweite Protokoll kommunikativ inkompatibel sind, wobei das Verfahren umfasst:
Speichern einer ersten Netzwerkadresse und einer zweiten Netzwerkadresse, die beide der Client-Vorrichtung (281) zugeteilt sind, wobei die erste Netzwerkadresse mit dem ersten nachgeschalteten Netzwerk assoziiert ist und die zweite Netzwerkadresse mit dem zweiten nachgeschalteten Netzwerk assoziiert ist;
Auswählen, basierend auf wenigstens einem Kommunikationsmerkmal, dass das Datenpaket an die Client-Vorrichtung (218) entweder direkt durch das erste nachgeschaltete Netzwerk oder indirekt durch das zweite nachgeschaltete Netzwerk über die Hauptleitung (203) und den zweiten Zugriffspunkt (261) geliefert wird; und
Liefern des Datenpakets gemäß der Auswahl.

## Revendications

1. Infrastructure de communication supportant des communications en mode commutation de paquets, l'infrastructure de communication comprenant :
un réseau fédérateur (203) supportant une communication en mode commutation de paquets ;
un premier réseau sans fil (205) fonctionnant conformément à un premier protocole sans fil ;
un second réseau sans fil (221) fonctionnant conformément à un second protocole sans fil qui est incompatible sur le plan des communications avec le premier protocole sans fil ;
un premier point d'accès (241) qui est configuré pour gérer le premier réseau sans fil (205), et est couplé sur le plan des communications au réseau fédérateur (203) ;
un second point d'accès (261) qui est configuré pour gérer le second réseau sans fil (221) et est couplé sur le plan des communications au réseau fédérateur (203) ;
un dispositif client (281) ayant un premier identifiant de réseau (289), le dispositif client (281) étant configuré pour communiquer avec le premier point d'accès (241) à l'aide du premier identifiant de réseau (289) ;
le dispositif client (281) ayant un second identifiant de réseau (291), le dispositif client (281) étant configuré pour communiquer avec le second point d'accès (261) à l'aide du second identifiant de réseau (291) ;
le premier point d'accès (241) est configuré pour stocker le premier identifiant de réseau (289) et le second identifiant de réseau (291) du dispositif client (281) ; et
le premier point d'accès (241) est configuré pour transmettre sans fil des premiers paquets de données au dispositif client (281) à l'aide du premier identifiant de réseau (289) et pour acheminer au dispositif client (281) des seconds paquets de données à l'aide du second identifiant de réseau (291) via le réseau fédérateur (203) et le second point d'accès (261).

2. Infrastructure de communication selon la revendication 1, **caractérisée en ce que** le premier réseau sans fil (205) est incompatible sur le plan des communications avec le second réseau sans fil (221).

3. Infrastructure de communication selon la revendication 1, **caractérisée en ce que** le premier point d'accès (241) est configuré pour exécuter le routage des seconds paquets de données sur la base d'une caractéristique de communication.

4. Point d'accès (403) dans une infrastructure de communication, l'infrastructure de communication ayant un réseau fédérateur (421) et un dispositif de destination (491), le point d'accès (403) comprenant :
une interface de communication de liaison montante (408) couplée sur le plan des communications au réseau fédérateur (421) ;
une interface de communication de liaison descendante (409) couplée sur le plan des communications au dispositif de destination (491) ;
une mémoire (407) qui contient à la fois une première adresse de réseau associée au dispositif de destination (491) et une seconde adresse de réseau associée au dispositif de destination (491) ;
un ensemble de circuits de traitement (405) couplé sur le plan des communications à la mémoire (407), à l'interface de communication de liaison montante (408) et à l'interface de communication de liaison descendante (409) ;
l'ensemble de circuits de traitement (405) est configuré pour diriger les communications au dispositif de destination (491) à la fois via l'interface de communication de liaison descendante (409) à l'aide de la première adresse de réseau et via l'interface de communication de liaison montante (408) et le réseau fédérateur (421) à l'aide de la seconde adresse de réseau.

5. Point d'accès (403) selon la revendication 4, **caractérisé en ce que** l'interface de communication de liaison descendante (409) est prioritaire par rapport à l'interface de communication de liaison montante (408).

6. Point d'accès (403) selon la revendication 4, **caractérisé en ce que** les communications dirigées vers le dispositif de destination (491) comprennent un premier type de paquet de données et un second type de paquet de données, et **en ce que** l'interface de communication de liaison montante (408) est utilisée pour livrer le premier type de paquet de données tandis que l'interface de communication de liaison descendante (409) est utilisée pour livrer le second type de paquet de données.

7. Point d'accès (403) selon la revendication 6, **caractérisé en ce qu'**une différence entre le premier type de paquet de données et le second type de paquet de données comprend une différence de qualité de service.

8. Infrastructure de communication comprenant :
un réseau fédérateur en mode commutation de paquets (203) ;
un premier réseau de fournisseur de services (205) couplé sur le plan des communications au réseau fédérateur en mode commutation de paquets (203) ;
un second réseau de fournisseur de services (221) couplé sur le plan des communications au réseau fédérateur en mode commutation de paquets (203) ;
un premier point d'accès (241) qui est couplé sur le plan des communications au premier réseau de fournisseur de services (205) et qui est configuré pour utiliser un premier protocole pour gérer un premier réseau sans fil ;
un second point d'accès (261) qui est couplé sur le plan des communications au second réseau de fournisseur de services (221) et qui est configuré pour utiliser un second protocole pour gérer un second réseau sans fil ;
un dispositif de destination ayant à la fois un premier émetteur-récepteur sans fil prévu pour être associé au premier point d'accès (241) et un second émetteur-récepteur sans fil prévu pour être associé au second point d'accès (261), le premier émetteur-récepteur sans fil ayant une première adresse de réseau et le second émetteur-récepteur sans fil ayant une seconde adresse de réseau ;
un premier dispositif source qui est configuré pour livrer une première pluralité de paquets par le biais du réseau fédérateur en mode commutation de paquets (203), chaque paquet de la première pluralité de paquets comportant la première adresse de réseau ; et
le premier point d'accès (241) est configuré pour recevoir la première pluralité de paquets via le premier réseau de fournisseur de services (205), et, pour chaque paquet de la première pluralité de paquets, le premier point d'accès (241) est configuré pour sélectionner la livraison au dispositif de destination soit via le premier réseau sans fil vers le premier émetteur-récepteur sans fil, soit via un routage à travers le réseau fédérateur en mode commutation de paquets (203), le second réseau de fournisseur de services (221), le second point d'accès (261) et le second réseau sans fil vers le second émetteur-récepteur sans fil à l'aide de la seconde adresse de réseau.

9. Infrastructure de communication selon la revendication 8, **caractérisée en ce que** le premier protocole est incompatible sur le plan des communications avec le second protocole.

10. Procédé exécuté par un premier point d'accès (241) qui livre un paquet de données à un dispositif client (281) dans une infrastructure de communication ayant un réseau fédérateur (203) et un second point d'accès (261), le premier point d'accès (241) et le second point d'accès (261) sont tous deux couplés sur le plan des communications au réseau fédérateur (203), le premier point d'accès (241) gère un premier réseau de liaison descendante à l'aide d'un premier protocole, le second point d'accès (261) gère un second réseau de liaison descendante à l'aide d'un second protocole, le premier protocole et le second protocole étant incompatibles sur le plan des communications, le procédé comprenant :
le stockage d'une première adresse de réseau et d'une seconde adresse de réseau, toutes deux attribuées au dispositif client (281), la première adresse de réseau étant associée au premier réseau de liaison descendante et la seconde adresse de réseau étant associée au second réseau de liaison descendante ;
la réalisation d'une sélection, sur la base d'au moins une caractéristique de communication, afin de livrer le paquet de données au dispositif client (281) soit directement par le biais du premier réseau de liaison descendante, soit indirectement par le biais du second réseau de liaison descendante via le réseau fédérateur (203) et le second point d'accès (261) ; et
la livraison du paquet de données conformément à la sélection.
